# EUROPÄISCHE PATENTSCHRIFT

(11) **EP 3 666 721 B1**
(45) Veröffentlichungstag und Bekanntmachung des Hinweises auf die Patenterteilung: **18.01.2023**
(21) Anmeldenummer: 19216598.3
(22) Anmeldetag: 06.07.2017
(51) Int. Cl.: B66F 9/075, B62B 3/04, B62B 3/00, B62B 3/06

(54) **STÜTZROLLE, FAHRZEUG MIT STÜTZROLLE UND VERFAHREN ZUR STABILISIERUNG EINES FAHRZEUGS**
SUPPORT ROLLER, VEHICLE WITH A SUPPORT ROLLER AND METHOD FOR STABILIZING A VEHICLE
ROULETTE DE SOUTIEN, VÉHICULE ÉQUIPÉ D'UNE ROULETTE DE SOUTIEN ET PROCÉDÉ DE STABILISATION D'UN VÉHICULE

(30) Priorität: 07.07.2016 DE 102016112511
(43) Veröffentlichungstag der Anmeldung: 17.06.2020
(62) Teilanmeldung aus: 17735557.5
(73) Patentinhaber: Blickle Räder + Rollen GmbH & Co.KG, 72348 Rosenfeld (DE)
(72) Erfinder: Hölle, Rolf, 72348 Rosenfeld (DE)
(74) Vertreter: Holzwarth-Rochford, Andreas

(56) Entgegenhaltungen:
- EP-A2- 2 500 237
- DE-A1- 19 753 412
- JP-A- 2004 010 292
- JP-A- 2006 089 214

## Beschreibung

Die vorliegende Erfindung betrifft eine Stützrolle zur Abstützung eines Fahrzeugs auf einem Untergrund, umfassend zumindest ein zumindest indirekt mit zumindest einer Tragstruktur des Fahrzeugs verbindbares Lagerelement, zumindest eine mit dem Lagerelement verbundene Gabel und zumindest ein in der Gabel um eine erste Rollachse drehbar gelagertes und in Kontakt mit dem Untergrund bringbares Rad. Auch betrifft die vorliegende Erfindung ein Fahrzeug mit einer solchen Stützrolle sowie ein Verfahren zum Stabilisieren eines Fahrzeugs.

Aus dem Stand der Technik sind verschiedenste Fahrzeuge zum Transport von Lasten bekannt. Beispielsweise laufen Flurförderzeuge mit Rollen auf einem Untergrund, Boden, oder Flur, können gelenkt werden und werden meist zum innerbetrieblichen Transport verwendet. Abhängig von der jeweiligen Bauart können Flurförderzeuge auch zum Heben und Stapeln von Lasten verwendet werden. Eine bekannte Bauart verwendet ein Fünfradfahrwerk, wobei ein Antriebsrad das Flurförderzeug antreibt und Stützrollen für die Stabilität des Flurförderzeugs sorgen. Diese Stützrollen sollen dem Flurförderzeug hauptsächlich seitliche Stabilität gegen Umkippen verleihen. Die Gefahr des Umkippens besteht beispielsweise bei engen Kurvenfahrten und dem gleichzeitigen Anheben und Transport von Lasten, wobei der Schwerpunkt des Flurförderzeugs ungünstigerweise von dem Untergrund auf dem das Flurförderzeug bewegt wird in Richtung Last verschoben wird. Als Stabilisationselement zur Begrenzung der Seitenneigung ist aus dem Stand der Technik der Einsatz einer federgelagerten um eine Drehachse drehbare Achse, einer sogenannten Koppelschwinge, bekannt, an deren Endbereichen Stützrollen angeordnet sind. Beispielsweise die nicht vorveröffentlichte DE 20 2015 103 436.9 beschreibt eine solche Koppelschwinge. Aufgabe der Koppelschwinge ist es, die Stützkraft entsprechend der Fahrsituation gleichmäßig auf die Stützrollen zu verteilen.

DE19753412A1 offenbart einen Gabelhubwagen mit einem Vier- oder Fünfradfahrwerk, mit einem Antriebsrad und mindestens einer Stützrolle am Rahmen des Antriebsteils, wobei die Stützrolle um eine vertikale Achse drehbar und vertikal beweglich am Rahmen gelagert ist. Der Stützrolle ist dabei ein kraftgetriebenes steuerbares Stellorgan zugeordnet, wobei das Stellorgan zur Veränderung der Aufstandskraft der Stützrolle von einem Betriebsparameter des Gabelhubwagens steuerbar ist.

JP2006089214A offenbart einen Gabelstapler mit einer Hebevorrichtung umfassend Hilfsräder an Schwenkarmen links und rechts vom Gabelstapler, wobei an den Hilfsrädern Dämpfungszylindern vorgesehen sein.

JP2004010292A offenbart eine Sicherheitsvorrichtung für einen Lastwagen, wobei die Sicherheitsvorrichtung den Benutzer über Schwankungen der Last an den Vorderrädern und den Hinterrädern informiert, wobei an den Vorderrädern und den Hinterrädern Redaktionssensoren angeordnet sind, um die Lastkräfte zu messen.

EP2500237A2 offenbart einen Gabelstapler mit einer verbesserten Stabilisierungskontrolle und Vibrationskontrolle, wobei die Belastungen an den Rädern gemessen werden und bei Überschreitung eines bestimmten Schwellenwerts die Rollen gesperrt bzw. entsprechend angesteuert werden.

Allerdings haben die aus dem Stand der Technik bekannten Lösungen den Nachteil, dass wenn sich das Fahrzeug zu einer Seite neigt, die Koppelschwinge nach oben, in entgegengesetzter Richtung zu dem Untergrund bewegt, bzw. gedreht, wird, so dass die gesamte Federkraft der Koppelschwinge lediglich auf eine Stützrolle wirkt, wobei die andere Stützrolle an der Koppelschwinge entsprechend entlastet wird und in einem Abstand zu dem Untergrund gehalten wird.

Aufgabe der vorliegenden Erfindung ist es daher, eine Stützrolle bereitzustellen, die bei Verwendung in einem Fahrzeug, insbesondere einem Flurförderzeug, die Erreichung einer gesteigerten Stabilität ermöglicht, so dass die Nachteile des Stands der Technik überwunden werden, insbesondere ein übermäßiges Neigen des Flurförderzeugs verhindert und somit die Gefahr des Umkippens reduziert.

Diese Aufgabe wird erfindungsgemäß gelöst durch eine Stützrolle nach Anspruch 1 und ein Verfahren zum Stabilisieren eines Fahrzeugs nach Anspruch 16.

Dabei kann vorgesehen sein, dass die Rollachse senkrecht zu einer Normalenrichtung des Untergrunds verläuft und/oder die Tragstruktur zumindest bereichsweise durch ein Karosserieteil des Fahrzeugs gebildet ist.

Das Lagerelement ist in Form zumindest eines Drehlagers ausgebildet und mittels des Drehlagers ist eine Drehung der Gabel um eine im Wesentlichen senkrecht zu der Rollachse verlaufende Schwenkachse möglich, wobei insbesondere sich die Rollachse und die Schwenkachse schneiden oder windschief zueinander verlaufen und/oder die Gabel und/oder die Rollachse mittels zumindest einer ersten Rückstelleinrichtung in zumindest eine vorbestimmte Lage relativ zu dem Lagerelement und/oder der Tragstruktur, vorzugsweise bezüglich der Schwenkachse, zwingbar ist.

Auch ist bevorzugt, dass mittels der Sensiereinrichtung eine Bewegung zumindest eines ersten Elements relativ zu zumindest einem zweiten Element erfassbar ist, vorzugsweise eine, insbesondere lineare, Bewegung in eine erste Richtung, die senkrecht zu der Rollachse und/oder parallel zu der Schwenkachse, verläuft, und/oder mittels der Sensiereinrichtung eine zwischen dem ersten Element und dem zweiten Element wirkende Kraft, insbesondere eine Zugkraft, eine Druckkraft und/oder Scherkraft, erfassbar ist.

Bei der vorgenannten Ausführungsform ist besonders bevorzugt, dass das erste Element ausgewählt ist aus der Gruppe umfassend die Rolle, eine in der Gabel gelagerte Lagerachse der Rolle, die Gabel, zumindest ein Verbindungsmittel der Gabel mit dem Lagerelement, wie einem Zapfen, und das Lagerelement, und/oder das zweite Element ausgewählt ist aus der Gruppe umfassend die Lagerachse, die Gabel, das Verbindungsmittel, das Lagerelement und die Tragstruktur.

Für die beiden vorgenannten Ausführungsformen wird auch vorgeschlagen, dass das zweite Element, insbesondere das Lagerelement, angepasst ist, das erste Element, insbesondere die Gabel, entlang der ersten Richtung beweglich zu halten, vorzugsweise ist das zweite Element angepasst, eine Bewegung des ersten Elements von bis zu 5 mm, insbesondere von 3 mm, vorzugsweise relativ zu dem zweiten Element, zu ermöglichen.

Weiterhin kann eine erfindungsgemäße Stützrolle dadurch gekennzeichnet, dass das erste Element, insbesondere die Gabel und/oder das Verbindungsmittel mittels zumindest einer zweiten Rückstelleleinrichtung in eine erste Position, insbesondere in eine Richtung auf das zweite Element zu, zwingbar ist.

Auch ist bevorzugt, dass die erste Rückstelleleinrichtung und/oder die zweite Rückstelleinrichtung zumindest ein elastisches Mittel, zumindest eine Druckfeder, zumindest eine Schraubenfeder, zumindest eine pneumatische Feder, zumindest eine hydraulische Feder und/oder zumindest eine Gasdruckfeder umfasst bzw. umfassen.

Bevorzugte Ausführungsformen der Erfindung sehen vor, dass die Sensiereinrichtung zumindest bereichsweise in dem Lagerelement und/oder auf der der Gabel und/oder dem Rad abgewandten Seite des Lagerelements, vorzugsweise des Drehlagers, angeordnet ist.

Eine erfindungsgemäße Stützrolle kann auch gekennzeichnet sein durch zumindest eine Positionserkennungseinrichtung, mittels der eine Ausrichtung der Gabel, der Lagerachse und/oder des Rads um die Schwenkachse und/oder relativ zu dem Untergrund bestimmbar ist.

Eine erfindungsgemäße Stützrolle kann schließlich dadurch gekennzeichnet sein, dass die Sensiereinrichtung und/oder die Positionserkennungseinrichtung zumindest ein Sensormittel, insbesondere umfassend zumindest einen Endlagenschalter, zumindest einen Dehnungsmesssenor, zumindest einen Drucksensor, zumindest einen Hall-Sensor, zumindest einen Radar-Sensor, zumindest einen Ultraschallsensor, zumindest einen Abstandsensor, zumindest einen Echolot-Sensor, zumindest einen akustischen Sensor, zumindest einen optischen Sensor, zumindest einen elektromagnetischen Sensor, und/oder zumindest einen magnetischen Sensor umfasst bzw. umfassen und/oder mittels der Sensiereinrichtung die erste Position und/oder zumindest eine zweite Position des ersten Elements relativ zu dem zweiten Element erfassbar ist.

Weiterhin liefert die Erfindung ein Fahrzeug, insbesondere Flurförderfahrzeug, umfassend zumindest eine erfindungsgemäße Stützrolle.

Mit der Erfindung wird dabei vorgeschlagen, dass das Fahrzeug ferner zumindest eine Koppelschwinge umfasst, wobei die Koppelschwinge mechanisch zwischen der Tragstruktur und der Stützrolle angeordnet ist und die Koppelschwinge zumindest eine um zumindest eine Drehachse drehbar gelagerte Wippe sowie ein mit der Wippe in Wirkverbindung stehender Hebel aufweist, wobei sich die Stützrolle, insbesondere das Lagerelement, an der der Schwenkachse und/oder der Wippe abgewandten Ende des Hebels abstützt, wobei ferner vorzugsweise der Hebelel von der Wippe umfasst ist und/oder zumindest bereichsweise einstückig mit der Wippe ausgebildet ist.

Hierbei ist besonders bevorzugt, dass die Koppelschwinge zumindest eine dritte Rückstelleinrichtung umfasst, mittels dem die Wippe und/oder der Hebel in zumindest eine dritte Position zwingbar ist, wobei die dritte Rückstelleleinrichtung vorzugsweise zumindest eine Torsionsfeder, zumindest eine Schraubenfeder, zumindest eine Zugfeder, zumindest eine Schubfeder, zumindest eine Scherfeder, zumindest ein gummielastisches Element, zumindest eine Schneckenfeder und/oder zumindest eine Gasdruckfeder umfasst.

Bei den beiden vorgenannten Ausführungsformen ist besonders bevorzugt, dass die Koppelschwinge zumindest eine Dämpfungsvorrichtung umfasst, wobei mittels der Dämpfungsvorrichtung eine Bewegung, insbesondere des Hebels, der Stützrolle und/oder der Wippe, um die Drehachse dämpfbar ist.

Weiterhin kann ein erfindungsgemäßes Fahrzeug gekennzeichnet sein durch zumindest ein, insbesondere mit der Dämpfungsvorrichtung in Wirkverbindung stehendes, Steuerorgan, wobei mittels des Steuerorgans eine Bewegung, insbesondere des Hebels, der Stützrolle und/oder der Wippe, um die Drehachse reduzierbar, vorzugsweise unterbindbar ist, wobei vorzugsweise das Steuerorgan zumindest bereichsweise von der Dämpfungsvorrichtung umfasst ist.

Auch wird mit der Erfindung vorgeschlagen, dass die Dämpfungsvorrichtung und/oder das Steuerorgan zumindest einen Zylinder, insbesondere einen Hydraulikzylinder, mit zumindest einem innerhalb des Zylinders bewegbaren Kolben umfasst, wobei der Zylinder mit dem Hebel, der Stützrolle, insbesondere dem Lagerelement, und/oder der Wippe, vorzugsweise über ein sich zumindest in eine radiale Richtung bezüglich der Drehachse erstreckendes Verbindungselement, und der Kolben mit der Tragstruktur oder der Kolben mit dem Hebel, der Wippe, der Stützrolle, dem Lagerelement und/oder dem Verbindungselement und der Zylinder mit der Tragstruktur in Wirkverbindung steht.

Bei der vorgenannten Ausführungsform ist besonders bevorzugt, dass das Steuerorgan zumindest ein Steuerelement umfasst, wobei das Steuerelement vorzugsweise zumindest ein Steuerventil umfasst und/oder mittels eines Schließen des Steuerelements eine Bewegung der Dämpfungsvorrichtung und/oder des Steuerorgans und/oder eine Bewegung, insbesondere der Wippe, des Hebels und/oder der Stützrolle, um die Drehachse unterbunden ist und bei einem Öffnen des Steuerelements eine Bewegung der Dämpfungsvorrichtung und/oder des Steuerorgans und/oder eine Bewegung, insbesondere der Wippe, des Hebels und/oder der Stützrolle, um die Drehachse freigegeben ist.

Weiterhin schlägt die Erfindung vor, dass ein erfindungsgemäßes Fahrzeug gekennzeichnet ist dadurch, dass der Zylinder vorzugsweise einen einfach wirkenden Zylinder umfasst und das Steuerelement ein Drosselelement umfasst, das angepasst ist die Durchflussmenge zumindest eines Fluids, vorzugsweise eine Hydraulikflüssigkeit, ein Gas und/oder Luft in den Zylinder zu steuern, vorzugsweise um eine Dämpfung zu ermöglichen, wobei vorzugsweise das Steuerelement angepasst ist, in Abhängigkeit von der mittels der Sensiereinrichtung erfassten Abstützkraft das Drosselelement zu steuern, um den Fluiddruck zu erhöhen, um eine Reduzierung der Abstützkraft unter einen vorbestimmten Wert zu vermeiden.

Auch schlägt die Erfindung vor, dass der Zylinder, insbesondere der Hydraulikzylinder, zumindest zwei über zumindest eine Drossel miteinander verbindbare Zylinderkammern umfasst, wobei insbesondere zwischen den Zylinderkammern, insbesondere durch Bewegung des Kolbens das Fluid bewegbar ist.

Weiterhin schlägt die Erfindung vor, dass das Steuerorgan zumindest ein Bremsmittel, insbesondere eine elektromagnetische Bremse, eine mechanische Bremse, eine haft- und/oder formschlüssig arbeitende Bremse umfasst, wobei das Bremsmittel, vorzugsweise einerseits mit der Wippe und/oder der Stützrolle und/oder andererseits mit der Tragstruktur in Wirkverbindung steht.

Bei der vorgenannten Ausführungsform ist besonders bevorzugt, dass das Bremsmittel, zumindest bereichsweise, vorzugsweise zirkular umlaufend um die Drehachse der Koppelschwinge angeordnet ist.

Weiterhin wird mit der Erfindung vorgeschlagen, dass zumindest eine mit dem Steuerorgan und/oder der Dämpfungsvorrichtung in Wirkverbindung stehende Steuereinrichtung, wobei die Steuereinrichtung zumindest eine Energieversorgung, insbesondere elektrische Spannungsversorgung und/oder eine Vorrichtung zur Speicherung und/oder Abgabe mechanischer Energie, des Bremsmittels umfasst, und wobei bei Abgabe von Energie von der Steuereinrichtung an das Steuerorgan eine Bewegung der Dämpfungsvorrichtung und/oder des Steuerorgans und/oder eine Bewegung, insbesondere der Wippe und /oder der Stützrolle, um die Drehachse unterbunden ist und bei einem Unterbrechen der Energieabgabe eine Bewegung der Dämpfungsvorrichtung und/oder des Steuerorgans und/oder eine Bewegung, insbesondere der Wippe und/oder der Stützrolle, um die Drehachse freigegeben ist.

Weiterhin schlägt die Erfindung vor, dass ein erfindungsgemäßes Fahrzeug gekennzeichnet ist durch zumindest eine mit der Sensiereinrichtung, der Positionserkennungseinrichtung, der Steuereinrichtung und/oder dem Steuerorgan, vorzugsweise dem Steuerelement, in Wirkverbindung stehende Steuervorrichtung, wobei vorzugsweise mittels der Steuervorrichtung das Steuerorgan derartig beeinflussbar ist, dass die Bewegung um die Drehachse reduziert, vorzugsweise unterbunden ist, wenn mittels der Sensiereinrichtung eine Abstützkraft sensiert wird, die einem fehlenden Kontakt zwischen der Stützrolle und dem Untergrund entspricht und/oder die Bewegung um die Drehachse zumindest teilweise freigegeben wird, wenn mittels der Sensiereinrichtung eine Abstützkraft sensiert wird, die einem bestehenden Kontakt zwischen der Stützrolle und dem Untergrund entspricht.

Bei der vorgenannten Ausführungsform ist besonders bevorzugt, dass die Steuervorrichtung das Steuerorgan in Abhängigkeit von einer Position zumindest einer Hubgabel des Fahrzeugs, insbesondere relativ zu dem Untergrund, einer Geschwindigkeit des Fahrzeugs und/oder eines Lenkwinkels des Fahrzeugs beeinflusst.

Weiterhin wird mit der Erfindung vorgeschlagen, dass das Steuerorgan zumindest ein Pumpenmittel zum Erhöhen eines Fluiddrucks in dem Zylinder, insbesondere den Zylinderkammern, umfasst, wobei vorzugsweise die Steuervorrichtung angepasst ist, in Abhängigkeit von der mittels der Sensiereinrichtung erfassten Abstützkraft das Pumpenmittel zu steuern, um den Fluiddruck zu erhöhen, um eine Reduzierung der Abstützkraft unter einen vorbestimmten Wert zu vermeiden.

Besonders bevorzugte Ausführungsformen des Fahrzeugs können gekennzeichnet sein durch eine Vielzahl von Stützrollen nach einem der Ansprüche 1 bis 11, wobei die Koppelschwinge vorzugsweise eine Vielzahl von, vorzugsweise an der Wippe angeordneten, von der Wippe umfassten und/oder zumindest bereichsweise einstückig mit der Wippe ausgebildeten Hebeln umfasst.

Schließlich wird für das erfindungsgemäße Fahrzeug vorgeschlagen, dass das Fahrzeug als Flurförderzeug und/oder als Gabelhubwagen mit zumindest einem Antriebsrad, insbesondere einen Gabelhubwagen mit Fünfradfahrwerk, ausgebildet ist.

Schließlich liefert die Erfindung ein Verfahren zum Stabilisieren eines Fahrzeugs, insbesondere eines erfindungsgemäßen Fahrzeugs, mit einer Koppelschwinge und zumindest einer Stützrolle gemäß dem Anspruch 1, mit den Schritten:
Erkennen einer Abstützkraft, mit der sich die Stützrolle auf einem Untergrund abstützt, wobei bei zumindest einer ersten Abstützkraft die Stützrolle in Kontakt mit dem Untergrund steht, und bei zumindest einer zweiten Abstützkraft die Stützrolle in keinem Kontakt mit dem Untergrund steht; und Steuern eines Steuerorgans in Abhängigkeit der erkannten Abstützkraft, wobei mittels des Steuerorgans bei Erkennen der zweiten Abstützkraft eine Drehung der Koppelschwinge und/oder der Stützrolle um eine Drehachse zumindest teilweise unterbunden wird.

Mit der Erfindung wird für das Verfahren auch vorgeschlagen, dass bei Erkennen der ersten Abstützkraft eine Bewegung um die Drehachse mittels zumindest einer Dämpfungsvorrichtung gedämpft wird.

Bei den beiden vorgenannten Ausführungsformen ist besonders bevorzugt, dass das Dämpfen und das Unterbinden der Bewegung um die Drehachse mittels einer Vorrichtung, die zumindest bereichsweise das Steuerorgan und die Dämpfungsvorrichtung umfasst, durchgeführt wird, insbesondere die Dämpfungsvorrichtung und das Steuerorgan zumindest bereichsweise einstückig ausgebildet werden.

Schließlich wird für das Verfahren vorgeschlagen, dass die Unterbindung der Bewegung um die Drehachse durch Unterbinden einer Bewegung der Dämpfungsvorrichtung und/oder zumindest einer dritten Rückstelleinrichtung erreicht wird.

Mit dem Begriff "Karosserieteil" bzw. "Tragstruktur" kann auch ein Anbau an eine Komponente des Fahrzeugs bezeichnet werden.

Der Erfindung liegt somit die überraschende Erkenntnis zu Grunde, dass durch Bereitstellung einer Stützrolle, die es ermöglicht eine Abstützkraft, mit der sich ein Rad der Stützrolle auf einem Untergrund abstützt, zu bestimmen, die Stabilität eines Fahrzeugs, in dem die Stützrolle verbaut ist, dadurch gesteigert werden kann, dass eine Neigung des Fahrzeugs, insbesondere eines Flurförderzeugs begrenzt werden kann.

Dies bedeutet, dass einer Neigung des Fahrzeugs proaktiv entgegengewirkt werden kann, bevor die Neigung so kritisch wird, dass das Fahrzeug umfallen könnte. Dieser Effekt wird insbesondere dadurch erreicht, dass die erfindungsgemäße Stützrolle mit einer Koppelschwinge kombiniert wird und eine Drehbewegung der Koppelschwinge um eine Drehachse dann begrenzt wird, wenn die Stützrolle sich von dem Untergrund abhebt. Dies wird dadurch erfasst, dass mittels der erfindungsgemäßen Sensiereinrichtung einer Abstützkraft detektiert wird, die unterhalb eines Schwellenwerts liegt, so dass auf ein Abheben der Stützrolle von dem Untergrund geschlossen werden kann. Diese Begrenzung der Drehbewegung der Koppelschwinge kann insbesondere dadurch erreicht werden, dass das Verhalten einer Dämpfungsvorrichtung verändert wird. Auch ist vorstellbar, dass ein Steuerorgan eingesetzt wird, welches die Drehbewegung der Koppelschwinge begrenzt, beispielsweise durch Einsatz einer mechanischen Arretierung in zumindest einer vorbestimmten vorzugsweise einer Vielzahl von Positionen der Koppelschwinge um die Drehachse. Dieser Effekt der Begrenzung bzw. Sperrung der Drehbewegung der Koppelschwinge um die Drehachse wird vorzugsweise durch eine Zylinderanlenkung an der Koppelschwinge erreicht, wodurch die Neigung des Fahrzeugs begrenzt werden kann.

Im Sinne der Erfindung wird der Begriff "Untergrund" verwendet, um insbesondere den Boden zu bezeichnen, auf dem sich die Stützrolle abstützt bzw. auf dem das Fahrzeug bewegt wird. Der Begriff "die Stützrolle keinen Kontakt mit dem Untergrund hat" kann daher verwendet werden, um zu definieren, dass sich die Stützrolle frei in der Luft befindet und das Flurförderzeug keine Stützlast auf die Stützrolle ausübt. Diese Position der Stützrolle wird dadurch erkannt, dass mittels der Sensiereinrichtung erfasst wird, dass die Abstützkraft unterhalb eines vorbestimmten Schwellenwerts liegt. Ein Kontakt mit dem Untergrund liegt dann vor, wenn die sensierte Abstützkraft einen vorbestimmten Schwellenwert übersteigt. Der Begriff "Bewegung um die Drehachse dämpfen" wird insbesondere verwendet, um eine gedämpfte Auf- und Abbewegung der Koppelschwinge oder eine Federung der Koppelschwinge zu bezeichnen. Der Begriff "federgelagert angeordnet" kann erfindungsgemäß verwendet werden, um zu definieren, dass die Koppelschwinge so an einem tragenden Karosserieteil angeordnet ist, dass sie zumindest in vertikaler Richtung beweglich, bzw. federnd ist. Die Federlagerung kann durch eine federnde Aufhängung der Koppelschwinge und/oder durch den Hydraulikzylinder bzw. eine zusätzliche Rückstelleinrichtung, wie eine Torsionsfeder erreicht werden.

Die Erkennung, ob das Fahrzeug neutral steht oder geneigt ist, kann einfach mittels Erkennung des Untergrundkontakts der Stützrollen durch Sensierung der Abstützkraft durchgeführt werden.

Erfindungsgemäß kann die Stützrolle eine Bockrolle darstellen. Bei einer solchen Bockrolle ist das Lagerelement so ausgestaltet, dass eine Drehung der Gabel bzw. des Rads um die Schwenkachse relativ zu dem Lagerelement unterbunden ist. Alternativ kann die Stützrolle auch als frei drehbare Stützrolle ausgebildet sein, bei welcher dann das Lagerelement die Form eines Drehlagers aufweist und eine Drehung der Gabel bzw. des Rads um die Schwenkachse ermöglicht. Die Stützrolle kann auch als zwangsgelenkte Rolle ausgebildet sein. Damit ist gemeint, dass eine Position der Gabel bzw. des Rads um die Schwenkachse mittels einer Aktuatoreinrichtung gesteuert bzw. geregelt verändert werden kann. Auch kann die erfindungsgemäße Stützrolle grundsätzlich frei schwenkbar sein jedoch mittels einer ersten Rückstelleinrichtung, insbesondere einer Spiralfeder in zumindest eine vorbestimmte Position, beispielsweise eine gerade Ausfahrtposition des Fahrzeugs gezwungen werden. Insbesondere wird die Stützrolle so, wenn sie Kontakt mit dem Untergrund hat, gegen die Kraft der ersten Rückstelleinrichtung in die Fahrtrichtung gezwungen werden. Verliert die Stützrolle jedoch den Kontakt zum Untergrund schwenkt diese durch die erste Rückstelleinrichtung in die Neutralstellung. Diese Bewegung kann über die Sensiereinrichtung erkannt und so auf die fehlende Abstützkraft geschlossen werden.

Bevorzugt wird mittels der Sensiereinrichtung die Abstützkraft indirekt gemessen. So kann vorgesehen sein, dass die Gabel relativ zu dem Lagerelement bewegbar gelagert ist, jedoch mittels einer zweiten Rückstelleinrichtung in eine vorbestimmte Position gezwungen wird. Kommt es dann zu einer Bewegung der Gabel relativ zu dem Lagerelement, erfolgt diese Bewegung gegen die durch die zweite Rückstelleinrichtung aufgebaute Kraft. Die Bestimmung der relativen Bewegung zwischen der Gabel und dem Lagerelement kann dann auf die auf die Stützrolle wirkende Kraft geschlossen werden. Insbesondere bewirkt die zweite Rückstelleinrichtung, dass die Gabel gegen das Lagerelement gezwungen wird, wenn sich die Stützrolle nicht im Kontakt mit dem Untergrund befindet und wenn ein Kontakt vorliegt gegen die durch die zweite Rückstelleinrichtung aufgebaute Kraft die Gabel relativ zu dem Lagerelement bewegt wird.

Der zuvor beschriebene Mechanismus ist jedoch nicht auf eine Bewegung der Gabel relativ zu dem Lagerelement beschränkt, sondern es kann im wesentlichen jede Relativbewegung zwischen Einzelkomponenten der Stützrolle dazu genutzt werden, um die Abstützkraft zu bestimmen. Ergänzend bzw. alternativ zu dem zuvor beschriebenen Mechanismus kann auch eine Abstützkraft indirekt dadurch bestimmt werden, dass mittels einer Positionserkennungseinrichtung die Ausrichtung der Gabel um die Schwenkachse bestimmt wird. Verändert sich diese Ausrichtung kontinuierlich kann davon ausgegangen werden, dass eine erhöhte Abstützkraft vorliegt und die Stützrolle in Kontakt mit dem Untergrund ist. Dies gilt insbesondere dann, wenn die Gabel mittels der ersten Rückstelleinrichtung in eine vorbestimmte Position gezwungen wird. Wird die Stützrolle aus der vorbestimmten Position ausgelenkt liegt ein Kontakt mit dem Untergrund vor und es kann so auf eine entsprechend vorherrschende Abstützkraft geschlossen werden. Als Dämpfungsvorrichtung, die auch gleichzeitig die Funktion eines Steuerorgans übernimmt, kann insbesondere ein Hydraulikzylinder vorgesehen sein. Dieser Hydraulikzylinder wird vorzugsweise mittels eines Hebels mit der Koppelschwinge, insbesondere der Wippe verbunden und stützt sich andererseits an der Tragstruktur ab. Kommt es zu einer Bewegung der Koppelschwinge, bzw. Wippe um die Drehachse wird mittels des Hydraulikzylinders diese Bewegung gedämpft. Die Dämpfungsvorrichtung kann selber eine dritte Rückstelleleinrichtung darstellen, mittels dem die Koppelschwinge in eine dritte Position gezwungen wird es kann jedoch auch vorgesehen sein, dass eine getrennte dritte Rückstelleinrichtung, insbesondere eine Torsionsfeder vorgesehen ist, um diese Funktion zu erreichen. Die Verwendung eines Hydraulikzylinders bietet den Vorteil, dass durch diesen auch das Steuerorgan selber gebildet werden kann.

Üblicherweise wird bei einem derartigen Hydraulikzylinder eine Dämpfung dadurch erreicht, dass bei einer Bewegung des Kolbens innerhalb des Zylinders ein Fluid von einer Zylinderkammer in eine andere Zylinderkammer über eine Drossel geführt wird. Die Drossel kann nun als ein steuerbares Ventil ausgebildet sein, so dass ein Fluss des Fluides von der einen Zylinderkammer in die andere unterbunden ist und so die Hydraulikzylinder der Bewegung der Koppelschwinge um die Drehachse vollständig sperrt. Durch diese Sperrung wird verhindert, dass es zu einer weiteren Drehung der Koppelschwinge kommt, die es ermöglichen könnte, dass die Stützrolle, die im Bodenkontakt ist, tiefer eintaucht und so es zu einem Umkippen des Fahrzeugs kommen könnte. In die Steuerung des Steuerorgans können auch andere weitere Parameter neben der Abstützkraft einfließen.

So können auch noch zusätzliche Parameter, wie die Position der Lenkgabel des Flurförderzeugs, die Geschwindigkeit, und/oder der Lenkwinkel in die Berechnung, ob die Bewegung der Koppelschwinge um die Drehachse gesperrt werden soll, hineinfließen, um eine möglichst hohe Sicherheit bei gleichzeitig guten Fahreigenschaften zu erreichen.

Auch kann in einer Ausführungsform vorteilhaft durch den Einsatz eines Drosselelements und/oder Pumpenmittels zum Erhöhen des Fluiddrucks zusätzlich dem Umkippen entgegengewirkt werden. So wird durch die Erhöhung des Drucks innerhalb der Zylinderkammern erreicht, dass eine Bewegung der Koppelschwinge eine höhere Gegenkraft entgegengesetzt wird.

Weitere Merkmale und Vorteile der Erfindung ergeben sich aus der nachfolgenden Beschreibung, in der bevorzugte Ausführungsformen der Erfindung anhand von schematischen Zeichnungen erläutert sind.

Dabei zeigt:
- Figur 1a, 1b: schematische Frontansichten eines aus dem Stand der Technik bekannten Flurförderzeugs in neutraler und geneigter Fahrzeugstellung;
- Figur 2: eine schematische Schnittansicht einer aus dem Stand der Technik bekannten Stützrolle;
- Figur 3a, 3b: schematische Schnittansichten einer Stützrolle gemäß einer Ausführungsform der Erfindung in einem unbelasteten und einem belasteten Zustand;
- Figur 4: eine schematische Ansicht einer Koppelschwinge mit einer ersten und einer zweiten Stützrolle und eines Hydraulikzylinders gemäß einer Ausführungsform der Erfindung;
- Figur 5a, 5b: Hydraulikschaltpläne zur Ansteuerung des Hydraulikzylinders gemäß Ausführungsformen der Erfindung;
- Figur 6: eine schematische Ansicht einer Koppelschwinge mit einer ersten und einer zweiten Stützrolle und eines Bremsmittels gemäß einer Ausführungsform der Erfindung;
- Figur 7: einen Schaltplan zur elektrischen Ansteuerung des Hydraulikventils gemäß Ausführungsformen der Erfindung; und
- Figur 8: ein Flussdiagramm das die Durchführung eines Verfahrens zum Stabilisieren eines Flurförderzeugs gemäß einer Ausführungsform der Erfindung, visualisiert.

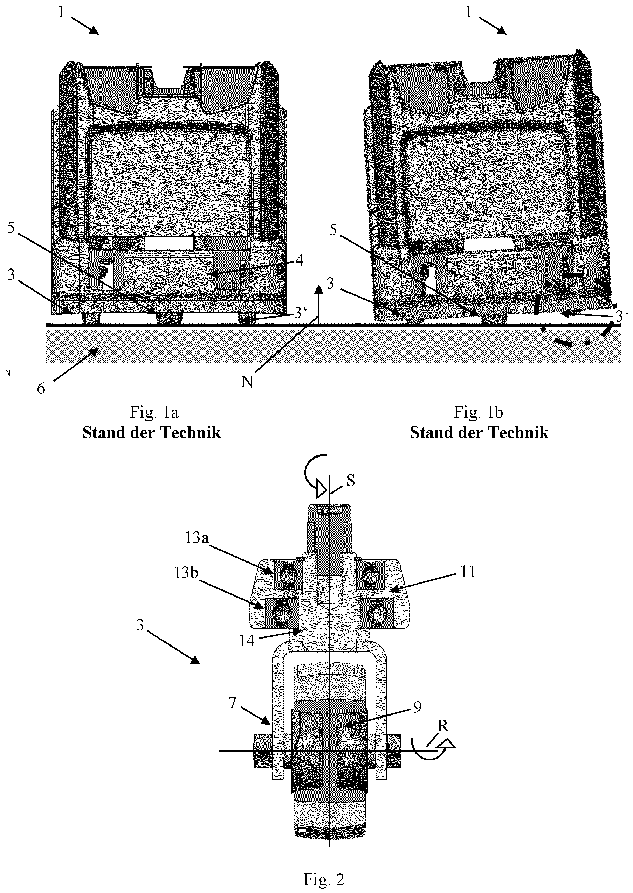

In Figur 1a ist eine schematische Frontansicht eines aus dem Stand der Technik bekannten Fahrzeugs in Form eines Flurförderzeugs 1 gezeigt. Das beispielhaft gezeigte Flurförderzeug 1 ist ein Gabelhubwagen mit Fünfradfahrwerk, wobei in Figur 1a lediglich die erste und die zweite Stützrolle 3, 3' und das Antriebsrad 5 die jeweils mit einer Tragstruktur 4 des Flurförderfahrzeugs 1 verbunden sind, gezeigt werden. Bei dem in Figur 1a gezeigten Flurförderzeug 1, befindet sich das Antriebsrad 5 im Wesentlichen mittig zwischen der ersten und der zweiten Stützrolle 3, 3'. Die erste und die zweite Stützrolle 3, 3' sind an einer Koppelschwinge (nicht gezeigt) befestigt und über diese Koppelschwinge miteinander verbunden. Die Koppelschwinge ist üblicherweise im Stand der Technik federgelagert an der Tragstruktur des Flurförderzeugs 1 befestigt und hat die Aufgabe, die Stützkraft entsprechend der Fahrsituation gleichmäßig auf die erste und die zweite Stützrolle 3, 3' zu verteilen.

In Figur 1b ist eine schematische Ansicht des in Figur 1a gezeigten Flurförderzeugs 1 in einer geneigten Stellung gezeigt. Das Flurförderzeug 1 kann sich beispielsweise bei engen Kurvendurchfahrten mit hochgehalten Lasten entsprechend neigen. Neigt sich das Flurförderzeug 1 zur Seite, wird die Koppelschwinge um eine Drehachse gedreht und die gesamte Federkraft der Koppelschwinge wirkt in dem gezeigten Beispiel auf die erste Stützrolle 3. Die zweite Stützrolle 3' wird entsprechend entlastet und verliert den Kontakt zu einem Untergrund 6, auf dem das Flurförderzeug 1 bewegt wird (gezeigt in Figur 1b mit einer gestrichelten Umrandung). Wenn sich nun das Flurförderzeug 1 weiter neigt, insbesondere sich die Stützrolle 3' weiter in der Normalenrichtung N des Untergrunds 6 bewegt, besteht die Gefahr des Umkippens. In dieser in Figur 1b dargestellten Situation liegt die Abstützkraft, mit der sich die Stützrolle 3' auf dem Untergrund 6 abstützt, unterhalb eines ersten Schwellenwerts, da die Stützrolle 3' nicht den Untergrund 6 berührt, die Stützrolle 3' also frei in der Luft ist.

Die Abstützkraft der Stützrolle 3 liegt hingegen über einem Schwellenwert, da die Stützrolle 3 im Kontakt mit dem Untergrund 6 steht.

In Figur 2 wird eine schematische Schnittansicht einer aus dem Stand der Technik bekannten Stützrolle 3 gezeigt. Die Stützrolle 3 umfasst eine Gabel, die als Halterung zur Aufnahme eines Rads 9 bestimmt ist. Das Rad 9 ist um eine Rollachse R drehbar in der Gabel gehalten. Mittels eines als Drehlager 11 ausgebildeten Lagers kann die als Lenkgabel 7 ausgebildete Gabel mit dem Rad 9 um eine Schwenkachse S drehbar um die eigene Achse mittels der Koppelschwinge (nicht gezeigt) an der Tragstruktur des Flurförderzeugs (nicht gezeigt) gehalten werden. In der gezeigten Stützrolle 3 sind hierfür zwei Kugellager 13a, 13b um den Zapfen 14 der Gabel 7 angeordnet. Über das Drehlager 11 wird das Rad 9 an der Koppelschwinge (nicht gezeigt) befestigt, damit das Rad 9 bei Kurvendurchfahrten mitlenken kann.

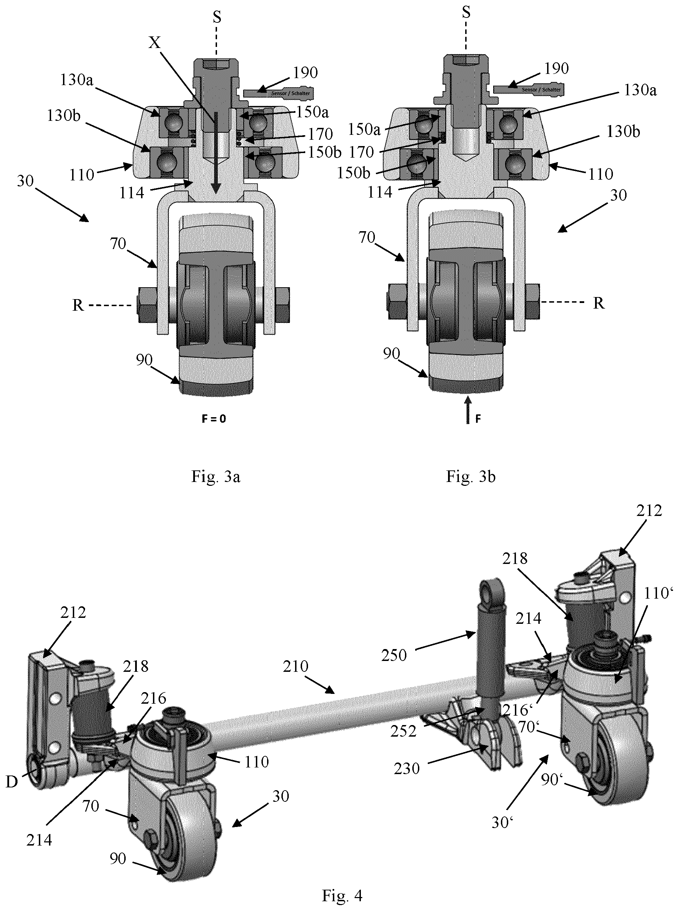

Figur 3a zeigt eine schematische Schnittansicht einer Stützrolle 30 gemäß einer Ausführungsform der Erfindung in einem unbelasteten Zustand. Dies bedeutet, dass die Abstützkraft unterhalb des ersten Schwellenwerts liegt, also die Stützrolle 30 insbesondere nicht in Kontakt mit dem Untergrund steht. Wie es in der Figur 3a gezeigt wird, entsprechen viele Merkmale der Stützrolle 30 den Merkmalen der in Figur 2 gezeigten Stand der Technik Stützrolle. Im Gegensatz zu der aus dem Stand der Technik bekannten Stützrolle, ist in der gezeigten Ausführungsform das Rad 90 über die Lenkgabel 70 nicht nur um die Schwenkachse S drehbar sondern auch entlang der ersten Richtung X, also axial zur Schwenkachse S beweglich in dem Drehlager 110 angeordnet. Um eine verbesserte Spurtreue zu erreichen, kann vorgesehen sein, dass die Lenkgabel 70 mittels einer nicht dargestellten ersten Rückstelleinrichtung in eine vorbestimmte Position um die Schwenkachse S gezogen wird. Hierfür sind in der gezeigten Ausführungsform Gleitlager 150a, 150b, zwischen den Kugellagern 130a, 130b und den Zapfen 114 der Lenkgable 70 eingepresst. Die Gleitlagerbuchsen 150a, 150b ermöglichen diese Bewegung des Rads 90 entlang der Richtung X. Weiterhin wird in Figur 3a gezeigt, dass eine zweite Rückstelleinrichtung, die als elastisches Mittel 170 in Form einer Feder ausgebildet ist, an einer Gleitbuchse 150 angeordnet ist, um das Rad 90 in einem unbelasteten Zustand senkrecht relativ zu dem Drehlager 110 ausgeschoben zu halten. Der Fachmann weiß aber, dass die Verschiebung auch mittels anderer Rückstelleinrichtungen, beispielsweise mittels einer Gummifeder erfolgen kann.

In Figur 3a ist die erste Richtung X mittels eines Pfeils dargestellt. In diesem Zusammenhang kann der Begriff "unbelasteter Zustand" dazu verwendet werden eine Position zu beschreiben, in der senkrecht auf das Rad 90 keine wesentliche Abstützkraft einwirkt. Beispielsweise wird diese Position eingenommen, wenn die Stützrolle 30 wegen einer Neigung des Flurförderzeugs keinen Kontakt mehr mit dem Untergrund hat.

Auch wird in Figur 3a schematisch eine Sensiereinrichtung 190 gezeigt, die beispielsweise als Endlagenschalter die Position der Lenkgabel 70 entlang der ersten Richtung X relativ zu dem Drehlager 110 erkennen kann. In weiteren nicht gezeigten Ausführungsformen kann die Erkennung aber alternativ oder zusätzlich zu der gezeigten Ausführungsform kontaktlos mittels eines Hall-Sensors und/oder eines Radarsensors erfolgen.

In Figur 3b wird eine schematische Schnittansicht der in Figur 3a gezeigten Stützrolle 30 in einem belasteten Zustand gezeigt. Beispielsweise kann dieser belastete Zustand eingenommen werden, wenn die Stützrolle 30 Kontakt mit dem Untergrund hat. Beispielsweise wenn das Gewicht des Flurförderzeugs (nicht gezeigt) eine axiale Kraft auf die Stütztrolle 30 ausübt und die Stützrolle 30 mit einer über dem zweiten Schwellenwert liegende Abstützkraft auf dem Untergrund aufliegt. Zwischen den beiden in Figur 3a und 3b gezeigten Positionen liegt ein Weg der Lenkgabel 70 relativ zu dem Drehlager 110 von ca. 3 mm. Der Fachmann weiß aber, dass auch kürzere oder längere Wege zurückgelegt werden können. Die veränderte Position kann dann über die Sensiereinrichtung 190 erkannt werden. Hierbei ist beachtlich, dass die Bewegung in die Richtung X gegen die durch das elastische Mittel 170, also die zweite Rückstelleinrichtung erzeugte Kraft erfolgt, so dass aus der Position auf die Abstützkraft, die auf die Stützrolle 30 wirkt geschlossen werden kann. Wenn nun die Abstützkraft wieder entfernt wird, kann die Stützrolle 30 wieder den in Figur 1 gezeigten unbelasteten Zustand einnehmen.

Figur 4 zeigt eine schematische Ansicht einer Koppelschwinge 210 mit einer ersten und zweiten Stützrolle 30, 30'. Die Koppelschwinge 210 ist mechanisch zwischen den Stützrollen 30, 30' und einem Lager 212 der Tragstruktur des Fahrzeugs angeordnet. Die Koppelschwinge 210 umfasst eine Wippe 214, an der Hebel 216, 216' angebracht sind. An den Hebeln 216, 216' stützen sich die Lager 212 ab. Die Wippe 214 ist derartig in dem Lager 212 gelagert, dass sie sich samt den Hebeln 216, 216' um eine Drehachse D drehen kann. Diese Drehung erfolgt gegen die Kraft einer dritten Rückstelleinrichtung 218 in Form einer gummielastischen Kompressionsfeder.

Die Koppelschwinge 210 umfasst ferner eine Dämpfungsvorrichtung in Form eines Hydraulikzylinders 250. Ein Kolben 252 des Hydraulikzylinders 250 stützt sich mittels eines Verbindungselements 230 an der Wippe 214 ab. Das Gehäuse des Hydraulikzylinders 250 stützt sich an der Tragstruktur des Fahrzeugs ab.

Die Koppelschwinge 210 ist gemäß der Erfindung, also mittels der dritten Rückstelleinrichtung federgelagert an der Tragstruktur des Fahrzeugs angeordnet. In der gezeigten Ausführungsform sind eine erste und eine zweite Stützrolle 30, 30' an gegenüberliegende Endbereichen der Koppelschwinge 210 angeordnet. In der gezeigten Ausführungsform können die in den Figuren 3a und 3b gezeigten Stützrollen mit Sensiereinrichtung verwendet werden. Der Fachmann weiß aber, dass auch andere Ausführungsformen verwendet werden können, beispielsweise Stützrollen mit Drucksensoren in den Rädern, und/oder Stützrollen die Hall Sensoren, und/oder Radar Sensoren zur Erfassung der Abstützkraft, zumindest indirekt durch Messung einer Bewegung entlang der ersten Richtung umfassen.

Der Hydraulikzylinder 250 erfüllt neben der Funktion der Dämpfungsvorrichtung auch die Funktion des Steuerorgans. Dazu ist in dem Hydraulikzylinder eine Drossel in Form eines steuerlosen Hydraulikventils angeordnet. Das Bewegen des Fluides innerhalb des Hydraulikzylinders 250 von einer Zylinderkammer oberhalb des Kolbens zur Zylinderkammer unterhalb des Kolbens kann über das Hydraulikventil derart gesteuert werden, dass in einem geschlossenen Zustand des Hydraulikventils die Bewegung des Hydraulikzylinders 250 gesperrt wird, um eine vertikale Bewegung, insbesondere eine Federung, der Koppelschwinge 210 und der daran angeordneten ersten und zweiten Stützrolle 30, 30' zu blockieren, und in einer offenen Stellung die Bewegung des Hydraulikzylinders 250 freizugeben, um die vertikale Bewegung, insbesondere Federung, der Koppelschwinge 210 und der daran angeordneten ersten und zweiten Stützrolle 30, 30' zu ermöglichen. Dabei bleibt die Öffnung des Ventils derart, dass weiterhin die Drosselfunktion erreicht wird und so eine Dämpfung sichergestellt ist.

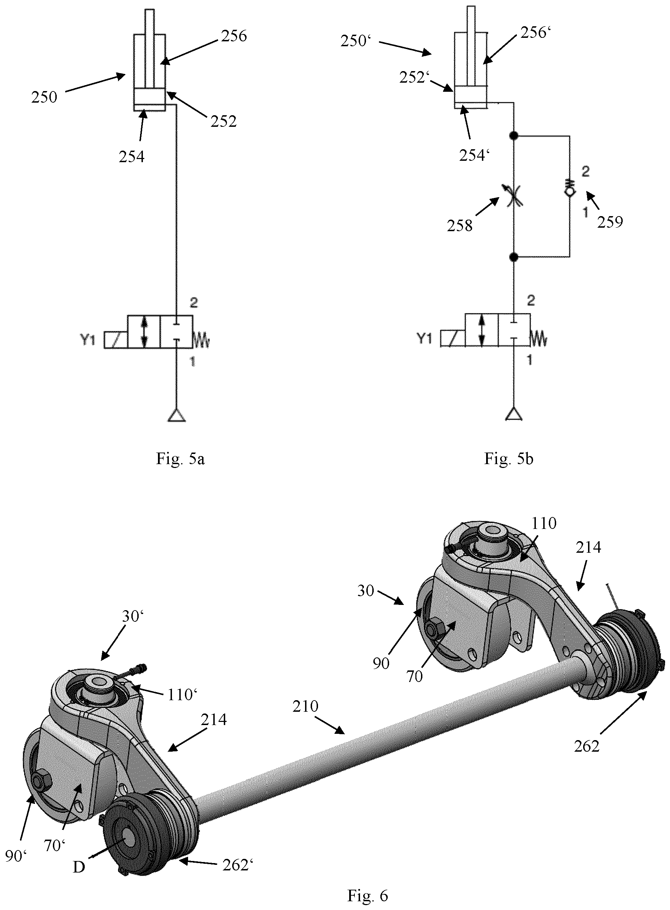

In den Figuren 5a, 5b werden Hydraulikschaltpläne zur Ansteuerung des Hydraulikzylinders 250, 250' gemäß Ausführungsformen der Erfindung gezeigt.

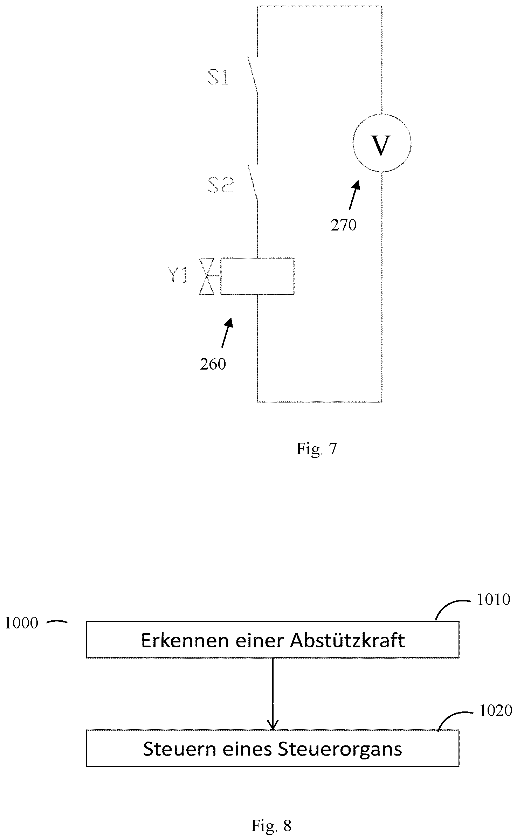

In dem in Figur 5a gezeigten Hydraulikschaltplan wird der Hydraulikzylinder 250, der als einfachwirkender Hydraulikzylinder gezeigt wird, mittels des Hydraulikventils Y1 gesteuert. In der gezeigten Ausführungsform besteht zwischen den Zylinderkammern 254 und 256 keine Verbindung. In der geschlossenen Stellung sperrt das Hydraulikventil Y1 die Bewegung des Kolbens 250. Ist Hydraulikventil Y1 hingegen in einer offenen Stellung, wird die Bewegung des Kolbens 252 freigegeben. Das Hydraulikventil Y1 kann wie es in Figur 7 gezeigt ist durch eine Steuervorrichtung 260 elektrisch betätigt werden, d.h. elektrisch geschlossen oder geöffnet werden.

In einer nicht gezeigten Ausführungsform kann zwischen den Zylinderkammern eine Verbindung bestehen, so dass die Bewegung oder das Federn der Koppelschwinge in der offenen Stellung ermöglicht werden kann, damit der Hydraulikzylinder die Funktionen des Steuerorgans erfüllen kann. Durch den Einbau einer Drossel in der Verbindung zwischen den Zylinderkammern kann ferner die Funktion der Dämpfungsvorrichtung realisiert werden.

Die in Figur 5b gezeigte Ausführungsform kann im Wesentlichen den Aufbau der in Figur 5a gezeigten Ausführungsform haben. In der gezeigten Ausführungsform wird der Hydraulikzylinder 250', der als einfachwirkender Hydraulikzylinder gezeigt wird, über ein Drosselelement 258 mittels des Hydraulikventils Y1 gesteuert. Das Drosselelement 258 ermöglicht es die Durchflussmenge des Fluids zu steuern und so bei offenem Hydraulikventil Y1 eine, insbesondere gedämpfte Bewegung zu ermöglichen. Vorteilhaft kann in der in Figur 5b gezeigten Ausführungsform durch ein Erhöhen/Absenken des Fluiddrucks in dem Hydraulikzylinder 250' einer Neigung aktiv entgegengewirkt werden. Dies kann durch eine Pumpenmittel unterstützt werden. Auch wird in Figur 5b ein Rückschlageventil 259 parallel zu dem Drosselelement 258 gezeigt. Mittels dieses Rückschlagventils 259 kann eine Einfahrbewegung des Zylinders gedämpft werden, wobei eine entgegengesetzte Ausfahrbewegung nicht gedämpft wird. Somit kann die Ausfahrbewegung schneller erfolgen.

In der gezeigten Ausführungsform kann durch eine Erhöhung des Fluiddrucks, der Zylinder ausgefahren und bei Reduzierung des Drucks eingefahren werden, um somit zusätzlich dem Umkippen entgegenzuwirken. So kann durch die Erhöhung des Drucks erreicht werden, dass eine Bewegung der Koppelschwinge eine höhere Gegenkraft entgegengesetzt wird.

Figur 6 ist eine schematische Ansicht einer Koppelschwinge 210 mit einer ersten und einer zweiten Stützrolle 30, 30' und einem Bremsmittel 262 gemäß einer Ausführungsform der Erfindung.

Die Stützrollen 30, 30' und die Befestigung der Stützrollen 30, 30' der in Figur 6 gezeigten Ausführungsform der Koppelschwinge 210' kann im wesentlichen der in Figur 4 gezeigten Ausführungsform entsprechen. Allerdings umfasst die in Figur 6 gezeigte Koppelschwinge 210 ein, als Steuerorgan und/oder als Dämpfungsvorrichtung wirkendes Bremsmittel 262, das als elektromagnetische Bremse realisiert ist. In der gezeigten Ausführungsform kann das Bremsmittel 262 um die Drehachse D angeordnet sein und weiterhin mittels einer Halteeinrichtung (nicht gezeigt) an der Tragstruktur des Fahrzeugs festgelegt sein.

Insbesondere erfüllt das Bremsmittel 262 neben der Funktion der Dämpfungsvorrichtung auch die Funktion des Steuerorgans. In der gezeigten Realisierung als elektromagnetische Bremse, sperrt die Bremse eine vertikale Bewegung, insbesondere eine Federung, der Koppelschwinge 210 und der daran angeordneten ersten und zweiten Stützrolle 30, 30', wenn die elektromagnetische Bremse eingeschaltet ist, bzw. ein Strom durch die Spule der Bremse fließt. Wenn kein Strom durch die Spule fließt, wird die vertikale Bewegung, insbesondere Federung, der Koppelschwinge 210 und der daran angeordneten ersten und zweiten Stützrolle 30, 30' freigegeben. In der gezeigten Ausführungsform sind zwei Bremsmittel 262, 262' an der Drehachse D der Koppelschwinge 210' an gegenüberliegenden Enden angeordnet. Beide Bremsmittel 262, 262' können gleichgeschaltet sein, um gleichzeitig die Bewegung der Koppelschwinge 210 zu ermöglichen und zu sperren. Der Fachmann weiß aber, dass auch eine nur ein Bremsmittel 262 für ein Sperren der Koppelschwinge 210' ausreicht.

In Figur 7 ist gezeigt, dass die Schaltkontakte S1, S2 die mit den Sensiereinrichtungen der Stützrollen wechselwirkend in Reihe geschaltet werden und die Spule des Hydraulikventils Y1 mit einer Spannungsquelle 270 verbinden. Somit wird, wenn beide Schaltkontakte S1, S2 geschlossen sind, d.h. die beiden Stützrollen in einer ersten Position sind, in der sie Kontakt mit dem Untergrund haben, das Hydraulikventil Y1 angesteuert, so dass es in einem ersten Modus geöffnet wird und offenbleibt, um eine Bewegung oder Federn der Koppelschwinge zuzulassen und zu dämpfen. Beispielsweise könnte die erfindungsgemäße Steuervorrichtung derart aufgebaut sein. Der Fachmann weiß aber, dass als Steuervorrichtung auch eine Speicherprogrammierbare Steuerung zum Einsatz kommen könnte.

Kommt es nun zu einer Neigung des Flurförderzeugs uns somit zu einer Entlastung einer der beiden Stützrollen an der Koppelschwinge, wird das Signal unterbrochen und der Hydraulikzylinder sperrt die Koppelschwinge. Somit kann die weitere Einfederung der belasteten Stützrolle verhindert werden. Haben beide Stützrollen wieder Kontakt mit dem Untergrund, wird das Hydraulikventil Y1 aufgrund der erkannten erhöhten Abstützkraft wieder geöffnet, so dass das Antriebsrad wieder ausreichend Last aufweist, die benötigt wird, um ausreichend Traktion beim Anfahren, Lenken und Bremsen zu gewährleisten.

In nicht dargestellten Ausführungsformen können auch mittels der Steuervorrichtung ein Fluiddruck innerhalb des Hydraulikzylinders verändert werden oder andere Steuermittel verwendet werden, wie eine über ein Positionierungsmittel detektierte Ausrichtung einer Stützrolle um die Schwenkachse.

Die in Figur 7 gezeigte Schaltung kann beispielsweise zur Ansteuerung der in den Figuren 5a und 5b gezeigten Hydraulikzylinder verwendet werden. Allerdings kann auch das in Figur 6 gezeigte und oben beschriebene Bremsmittel mittels einer solchen Schaltung angesteuert werden, wenn die Spule des Bremsmittels anstelle der Spule des Hydraulikventils in der Schaltung angeschlossen wird.

Figur 8 zeigt ein Verfahren 1000 zum Stabilisieren eines Flurförderzeugs gemäß einer Ausführungsform der Erfindung. Das Verfahren umfasst die Schritte:
Erkennen 1010 einer Abstützkraft, mit der sich die Stützrolle auf einem Untergrund abstützt, wobei bei zumindest einer ersten Abstützkraft die Stützrolle in Kontakt mit dem Untergrund steht, und bei zumindest einer zweiten Abstützkraft die Stützrolle in keinem Kontakt mit dem Untergrund steht; und Steuern 1020 eines Steuerorgans in Abhängigkeit der erkannten Abstützkraft, wobei mittels des Steuerorgans bei Erkennen der zweiten Abstützkraft eine Drehung der Koppelschwinge 210 und/oder der Stützrolle um eine Drehachse zumindest teilweise unterbunden wird.

### Bezugszeichenliste

- 1: Flurförderzeug
- 3, 3', 30, 30': Stützrolle
- 4: Tragstruktur
- 5: Antriebsrad
- 6: Untergrund
- 7, 70, 70': Lenkgabel
- 9, 90, 90': Rad
- 11, 110, 110': Drehlager
- 13a, 13b, 130a, 130b: Kugellager
- 14, 114: Zapfen
- 150a, 150b: Gleitlager
- 170: elastisches Mittel
- 190: Sensiereinrichtung
- 210: Koppelschwinge
- 212: Lager
- 214: Wippe
- 216, 216': Hebel
- 218: Rückstelleinrichtung
- 230: Verbindungselement
- 250, 250': Hydraulikzylinder
- 252, 252': Kolben
- 254, 256, 254', 256': Zylinderkammer
- 258: Drosselelement
- 259: Rückschlagventil
- 260: Steuervorrichtung
- 262: Bremsmittel
- 270: Spannungsquelle
- 1000: Verfahren zum Stabilisieren eines Flurförderzeugs
- 1010: Erkennen einer Position
- 1020: Steuern eines Stellzylinders
- S1, S2: Schaltkontakt
- Y1: Hydraulikventil
- S: Schwenkachse
- R: Rollachse
- X: Richtung
- N: Normalenrichtung
- D: Drehachse

## Patentansprüche

1. Stützrolle (30, 30') zur Abstützung eines Fahrzeugs auf einem Untergrund, umfassend zumindest ein zumindest indirekt mit zumindest einer Tragstruktur des Fahrzeugs verbindbares Lagerelement (110, 110'),
zumindest eine mit dem Lagerelement verbundene Gabe (70) und zumindest ein in der Gabel um eine erste Rollachse (R) drehbar gelagertes und in Kontakt mit dem Untergrund bringbares Rad (90, 90'), wobei die Stützrolle ferner zumindest eine Sensiereinrichtung (190) zur Erfassung zumindest einer Abstützkraft, mit der das Rad (90, 90') sich auf dem Untergrund abstützt, umfasst, **dadurch gekennzeichnet, dass**
das Lagerelement in Form zumindest eines Drehlagers (110, 110') ausgebildet ist und mittels des Drehlagers (110, 110') eine Drehung der Gabel um eine im Wesentlichen senkrecht zu der Rollachse (R) verlaufende Schwenkachse (S) möglich ist, wobei die Gabel und/oder die Rollachse (R) mittels zumindest einer ersten Rückstelleinrichtung in zumindest eine vorbestimmte Lage relativ zu dem Lagerelement und/oder der Tragstruktur bezüglich der Schwenkachse (S) zwingbar ist.

2. Stützrolle (30, 30') nach Anspruch 1, **dadurch gekennzeichnet, dass**
(i) die Rollachse (R) senkrecht zu einer Normaleinrichtung (N) des Untergrunds verläuft und/oder die Tragstruktur zumindest bereichsweise durch ein Karosserieteil des Fahrzeugs gebildet ist;
(ii) sich die Rollachse (R) und die Schwenkachse (S) schneiden oder windschief zueinander verlaufen, und/oder
(iii) mittels der Sensiereinrichtung (190) eine Bewegung zumindest eines ersten Elements relativ zu zumindest einem zweiten Element erfassbar ist, vorzugsweise eine, insbesondere lineare, Bewegung in eine erste Richtung, die senkrecht zu der Rollachse (R) und/oder parallel zu der Schwenkachse (S) verläuft, und/oder mittels der Sensiereinrichtung (190) eine zwischen dem ersten Element und dem zweiten Element wirkende Kraft, insbesondere eine Zugkraft, eine Druckkraft und/oder Scherkraft, eine Zugkraft, eine Druckkraft und/oder Scherkraft erfassbar ist.

3. Stützrolle (30, 30') nach Anspruch 1 oder 2, **dadurch gekennzeichnet, dass**
(a) das erste Element ausgewählt ist aus der Gruppe umfassend die Rolle, eine in der Gabel gelagerte Lagerachse der Rolle, die Gabel, zumindest ein Verbindungsmittel der Gabel mit dem Lagerelement, wie einem Zapfen (114), und das Lagerelement, und/oder das zweite Element ausgewählt ist aus der Gruppe umfassend die Lagerachse, die Gabel, das Verbindungsmittel, das Lagerelement und die Tragstruktur,
(b) das zweite Element, insbesondere das Lagerelement angepasst ist, das erste Element, insbesondere die Gabel, entlang der ersten Richtung (X) beweglich zu halten, vorzugsweise ist das zweite Element (110, 110') angepasst, eine Bewegung des ersten Elements von bis zu 5 mm, insbesondere von 3 mm, vorzugsweise relativ zu dem zweiten Element, zu ermöglichen, und/oder
(c) das erste Element, insbesondere die Gabel und/oder das Verbindungsmittel, mittels zumindest einer zweiten Rückstelleinrichtung in eine erste Position, insbesondere in eine Richtung (X) auf das zweite Element zu, zwingbar ist.

4. Stützrolle (30, 30') nach Anspruch 2 oder 3, **dadurch gekennzeichnet, dass**
die erste Rückstelleinrichtung und/oder die zweite Rückstelleinrichtung zumindest ein elastisches Mittel (170), zumindest eine Druckfeder, zumindest eine Schraubenfeder, zumindest eine pneumatische Feder, zumindest eine hydraulische Feder und/oder zumindest eine Gasdruckfeder umfasst bzw. umfassen, und/oder
die Sensiereinrichtung (190) zumindest bereichsweise in dem Lagerelement und/oder auf der der Gabel und/oder dem Rad (90, 90') abgewandten Seite des Lagerelements, vorzugsweise des Drehlagers (110, 110'), angeordnet ist.

5. Stützrolle (30, 30') nach einem der vorangehenden Ansprüche, **gekennzeichnet durch** zumindest eine Positionserkennungseinrichtung, mittels der eine Ausrichtung der Gabel, der Lagerachse und/oder des Rads (90, 90') um die Schwenkachse (S) und/oder relativ zu dem Untergrund bestimmbar ist.

6. Stützrolle (30, 30') nach einem der vorangehenden Ansprüche, **dadurch gekennzeichnet, dass**
die Sensiereinrichtung (190) und/oder die Positionserkennungseinrichtung zumindest ein Sensormittel, insbesondere umfassend zumindest einen Endlagenschalter, zumindest einen Dehnungsmesssenor, zumindest einen Drucksensor, zumindest einen Hall-Sensor, zumindest einen Radar-Sensor, zumindest einen Ultraschallsensor, zumindest einen Abstandsensor, zumindest einen Echolot-Sensor, zumindest einen akustischen Sensor, zumindest einen optischen Sensor, zumindest einen elektromagnetischen Sensor und/oder zumindest einen magnetischen Sensor umfasst bzw. umfassen und/oder mittels der Sensiereinrichtung (190) die erste Position und/oder zumindest eine zweite Position des ersten Elements relativ zu dem zweiten Element erfassbar ist.

7. Fahrzeug, insbesondere Flurförderfahrzeug, umfassend zumindest eine Stützrolle (30, 30') nach einem der vorangehenden Ansprüche.

8. Fahrzeug nach Anspruch 7, **dadurch gekennzeichnet, dass**
das Fahrzeug ferner zumindest eine Koppelschwinge (210) umfasst, wobei die Koppelschwinge (210) mechanisch zwischen der Tragstruktur und der Stützrolle (30, 30') angeordnet ist und die Koppelschwinge (210) zumindest eine um zumindest eine Drehachse (D) drehbar gelagerte Wippe (214) sowie ein mit der Wippe (214) in Wirkverbindung stehender Hebel (216, 216') aufweist, wobei sich die Stützrolle (30, 30'), insbesondere das Lagerelement, an der der Schwenkachse (S) und/oder der Wippe (214) abgewandten Ende des Hebels (216, 216') abstützt, wobei ferner vorzugsweise der Hebel (216, 216') von der Wippe (214) umfasst ist und/oder zumindest bereichsweise einstückig mit der Wippe (214) ausgebildet ist, wobei insbesondere die Koppelschwinge (210) zumindest eine dritte Rückstelleinrichtung umfasst, mittels der die Wippe (214) und/oder der Hebel (216, 216') in zumindest eine dritte Position zwingbar ist, wobei die dritte Rückstelleinrichtung vorzugsweise zumindest eine Torsionsfeder, zumindest eine Schraubenfeder, zumindest eine Zugfeder, zumindest eine Schubfeder, zumindest eine Scherfeder, zumindest ein gummielastisches Element, zumindest eine Schneckenfeder und/oder zumindest eine Gasdruckfeder umfasst.

9. Fahrzeug nach Anspruch 8, **dadurch gekennzeichnet, dass**
(i) die Koppelschwinge (210) zumindest eine Dämpfungsvorrichtung umfasst, wobei mittels der Dämpfungsvorrichtung eine Bewegung, insbesondere des Hebels (216, 216'), der Stützrolle (30, 30') und/oder der Wippe (214), um die Drehachse (D) dämpfbar ist und/oder
(ii) das Fahrzeug **gekennzeichnet ist durch** zumindest ein, insbesondere mit der Dämpfungsvorrichtung in Wirkverbindung stehendes, Steuerorgan, wobei mittels des Steuerorgans eine Bewegung, insbesondere des Hebels (216, 216'), der Stützrolle (30, 30') und/oder der Wippe (214), um die Drehachse (D) reduzierbar, vorzugsweise unterbindbar ist, wobei vorzugsweise das Steuerorgan zumindest bereichsweise von der Dämpfungsvorrichtung umfasst ist.

10. Fahrzeug nach Anspruch 9, **dadurch gekennzeichnet, dass**
die Dämpfungsvorrichtung und/oder das Steuerorgan zumindest einen Zylinder, insbesondere einen Hydraulikzylinder (250), mit zumindest einem innerhalb des Zylinders bewegbaren Kolben (252) umfasst, wobei der Zylinder mit dem Hebel (216, 216'), der Stützrolle (30, 30'), insbesondere dem Lagerelement, und/oder der Wippe (214), vorzugsweise über ein sich zumindest in eine radiale Richtung bezüglich der Drehachse (D) erstreckendes Verbindungselement (230), und der Kolben (252) mit der Tragstruktur oder der Kolben (252) mit dem Hebel (216, 216'), der Wippe (214), der Stützrolle (30, 30'), dem Lagerelement und/oder dem Verbindungselement (230) und der Zylinder mit der Tragstruktur in Wirkverbindung steht.

11. Fahrzeug nach Anspruch 10, **dadurch gekennzeichnet, dass**
das Steuerorgan zumindest ein Steuerelement umfasst, wobei das Steuerelement vorzugsweise zumindest ein Steuerventil umfasst und/oder mittels eines Schließen des Steuerelements eine Bewegung der Dämpfungsvorrichtung und/oder des Steuerorgans und/oder eine Bewegung, insbesondere der Wippe (214), des Hebels (216, 216') und/oder der Stützrolle (30, 30'), um die Drehachse (D) unterbunden ist und bei einem Öffnen des Steuerelements eine Bewegung der Dämpfungsvorrichtung und/oder des Steuerorgans und/oder eine Bewegung, insbesondere der Wippe (214), des Hebels (216, 216') und/oder der Stützrolle (30, 30'), um die Drehachse (D) freigegeben ist.

12. Fahrzeug nach Anspruch 11, **dadurch gekennzeichnet, dass**
(i) der Zylinder vorzugsweise einen einfach wirkenden Zylinder umfasst und das Steuerelement ein Drosselelement (258) umfasst, das angepasst ist die Durchflussmenge zumindest eines Fluids, vorzugsweise eine Hydraulikflüssigkeit, ein Gas und/oder Luft in den Zylinder zu steuern, vorzugsweise um eine Dämpfung zu ermöglichen, wobei vorzugsweise das Steuerelement angepasst ist, in Abhängigkeit von der mittels der Sensiereinrichtung erfassten Abstützkraft das Drosselelement (258) zu steuern, um den Fluiddruck zu erhöhen, um eine Reduzierung der Abstützkraft unter einen vorbestimmten Wert zu vermeiden, oder
(ii) der Zylinder, insbesondere der Hydraulikzylinder (250), zumindest zwei über zumindest eine Drossel miteinander verbindbare Zylinderkammern (254, 256) umfasst, wobei insbesondere zwischen den Zylinderkammern (254, 256), insbesondere durch Bewegung des Kolbens (252) das Fluid bewegbar ist.

13. Fahrzeug nach Anspruch 9, **dadurch gekennzeichnet, dass**
das Steuerorgan zumindest ein Bremsmittel (262), insbesondere eine elektromagnetische Bremse, eine mechanische Bremse, eine haft- und/oder formschlüssig arbeitende Bremse umfasst, wobei das Bremsmittel, vorzugsweise einerseits mit der Wippe (214) und/oder der Stützrolle (30, 30') und/oder andererseits mit der Tragstruktur in Wirkverbindung steht, wobei vorzugsweise
(a) das Bremsmittel (262), zumindest bereichsweise, vorzugsweise zirkular umlaufend um die Drehachse (D) der Koppelschwinge (210) angeordnet ist, und/oder
(b) das Fahrzeug **gekennzeichnet ist durch** zumindest eine mit dem Steuerorgan und/oder der Dämpfungsvorrichtung in Wirkverbindung stehende Steuereinrichtung, wobei die Steuereinrichtung zumindest eine Energieversorgung, insbesondere elektrische Spannungsversorgung und/oder eine Vorrichtung zur Speicherung und/oder Abgabe mechanischer Energie, des Bremsmittels (262) umfasst, und wobei bei Abgabe von Energie von der Steuereinrichtung an das Steuerorgan eine Bewegung der Dämpfungsvorrichtung und/oder des Steuerorgans und/oder eine Bewegung, insbesondere der Wippe (214) und/oder der Stützrolle (30, 30'), um die Drehachse (D) unterbunden ist und bei einem Unterbrechen der Energieabgabe eine Bewegung der Dämpfungsvorrichtung und/oder des Steuerorgans und/oder eine Bewegung, insbesondere der Wippe (214) und/oder der Stützrolle (30, 30'), um die Drehachse (D) freigegeben ist.

14. Fahrzeug nach einem der Ansprüche 7 bis 13, **gekennzeichnet durch** zumindest eine mit der Sensiereinrichtung (190), der Positionserkennungseinrichtung, der Steuereinrichtung und/oder dem Steuerorgan, vorzugsweise dem Steuerelement, in Wirkverbindung stehende Steuervorrichtung, wobei vorzugsweise mittels der Steuervorrichtung das Steuerorgan derartig beeinflussbar ist, dass die Bewegung um die Drehachse (D) reduziert, vorzugsweise unterbunden ist, wenn mittels der Sensiereinrichtung (190) eine Abstützkraft sensiert wird, die einem fehlenden Kontakt zwischen der Stützrolle (30, 30') und dem Untergrund entspricht und/oder die Bewegung um die Drehachse (D) zumindest teilweise freigegeben wird, wenn mittels der Sensiereinrichtung (190) eine Abstützkraft sensiert wird, die einem bestehenden Kontakt zwischen der Stützrolle (30, 30') und dem Untergrund entspricht, wobei insbesondere die Steuervorrichtung das Steuerorgan in Abhängigkeit von einer Position zumindest einer Hubgabel des Fahrzeugs, insbesondere relativ zu dem Untergrund, einer Geschwindigkeit des Fahrzeugs und/oder eines Lenkwinkels des Fahrzeugs beeinflusst.

15. Fahrzeug nach einem der Ansprüche 7 bis 14, **dadurch gekennzeichnet, dass**
(i) das Steuerorgan zumindest ein Pumpenmittel zum Erhöhen eines Fluiddrucks in dem Zylinder, insbesondere den Zylinderkammern (254, 256), umfasst, wobei vorzugsweise die Steuervorrichtung angepasst ist, in Abhängigkeit von der mittels der Sensiereinrichtung (190) erfassten Abstützkraft das Pumpenmittel zu steuern, um den Fluiddruck zu erhöhen, um eine Reduzierung der Abstützkraft unter einen vorbestimmten Wert zu vermeiden,
(ii) das Fahrzeug **gekennzeichnet ist durch** eine Vielzahl von Stützrollen (30, 30') nach einem der Ansprüche 1 bis 6, wobei die Koppelschwinge (210) vorzugsweise eine Vielzahl von, vorzugsweise an der Wippe (214) angeordneten, von der Wippe (214) umfassten und/oder zumindest bereichsweise einstückig mit der Wippe (214) ausgebildeten Hebeln (216, 216') umfasst, und/oder
(iii) das Fahrzeug als Flurförderzeug und/oder als Gabelhubwagen mit zumindest einem Antriebsrad, insbesondere einen Gabelhubwagen mit Fünfradfahrwerk, ausgebildet ist.

16. Verfahren (1000) zum Stabilisieren eines Fahrzeugs, insbesondere eines Fahrzeugs nach einem der Ansprüche 7 bis 15, mit einer Koppelschwinge (210) und zumindest einer Stützrolle (30, 30') nach einem der Ansprüche 1 bis 6 mit den Schritten:
Erkennen (1010) einer Abstützkraft, mit der sich die Stützrolle (30, 30') auf einem Untergrund abstützt, wobei bei zumindest einer ersten Abstützkraft die Stützrolle (30, 30') in Kontakt mit dem Untergrund steht, und bei zumindest einer zweiten Abstützkraft die Stützrolle (30, 30') in keinem Kontakt mit dem Untergrund steht; und Steuern (1020) eines Steuerorgans (250) in Abhängigkeit der erkannten Abstützkraft, wobei mittels des Steuerorgans bei Erkennen der zweiten Abstützkraft eine Drehung der Koppelschwinge (210) und/oder der Stützrolle (30, 30') um eine Drehachse (D) zumindest teilweise unterbunden wird.

17. Verfahren (1000) nach Anspruch 16, **dadurch gekennzeichnet, dass**
(a) bei Erkennen der ersten Abstützkraft eine Bewegung um die Drehachse (D) mittels zumindest einer Dämpfungsvorrichtung gedämpft wird,
(b) das Dämpfen und das Unterbinden der Bewegung um die Drehachse (D) mittels einer Vorrichtung, die zumindest bereichsweise das Steuerorgan und die Dämpfungsvorrichtung umfasst, durchgeführt wird, insbesondere die Dämpfungsvorrichtung und das Steuerorgan zumindest bereichsweise einstückig ausgebildet werden, und/oder
(c) die Unterbindung der Bewegung um die Drehachse (D) durch Unterbinden einer Bewegung der Dämpfungsvorrichtung und/oder zumindest einer dritten Rückstelleinrichtung erreicht wird.

## Claims

1. A support roller (30, 30') for supporting a vehicle on a subsurface, comprising at least one bearing element (110, 110') which can be connected at least indirectly to at least one supporting structure of the vehicle, at least one fork (70) which is connected to the bearing element, and at least one wheel (90, 90') which is mounted in the fork so as to be rotatable about a first rolling axis (R) and can be brought into contact with the subsurface, the support roller further comprising at least one sensing device (190) for sensing at least one supporting force with which the wheel (90, 90') is supported on the subsurface, **characterized in that**
the bearing element is in the form of at least one pivot bearing (110, 110'), and, by means of the pivot bearing (110, 110'), the fork is able to rotate about a pivot axis (S) extending substantially perpendicular to the rolling axis (R), wherein the fork and/or the rolling axis (R) can be forced by means of at least one first restoring device into at least one predetermined position relative to the bearing element and/or the supporting structure with respect to the pivot axis (S).

2. The support roller (30, 30') according to Claim 1, **characterized in that**
(i) the rolling axis (R) extends perpendicular to a normal device (N) of the subsurface, and/or the supporting structure is formed at least in areas by a body part of the vehicle;
(ii) the rolling axis (R) and the pivot axis (S) intersect or run at an angle to one another, and/or
(iii) a movement of at least one first element relative to at least one second element can be sensed by means of the sensing device (190), preferably a movement, in particular a linear movement, in a first direction which is perpendicular to the rolling axis (R) and/or parallel to the pivot axis (S), and/or a force, in particular a tensile force, a compressive force and/or a shear force, acting between the first element and the second element, can be sensed by means of the sensing device (190).

3. The support roller (30, 30') according to Claim 1 or 2, **characterized in that**
(a) the first element is selected from the group comprising the roller, a bearing shaft of the roller which is mounted in the fork, the fork, at least one connecting means of the fork to the bearing element, such as a pivot (114), and the bearing element, and/or the second element is selected from the group comprising the bearing shaft, the fork, the connecting means, the bearing element and the support structure,
(b) the second element, in particular the bearing element, is adapted to keep the first element, in particular the fork, movable along the first direction (X), and preferably the second element (110, 110') is adapted to allow a movement of the first element of up to 5 mm, in particular 3 mm, preferably relative to the second element, and/or
(c) the first element, in particular the fork and/or the connecting means, can be forced by means of at least one second restoring device into a first position, in particular in a direction (X) towards the second element.

4. The support roller (30, 30') according to Claim 2 or 3, **characterized in that**
the first restoring device and/or the second restoring device comprise(s) at least one elastic means (170), at least one compression spring, at least one helical spring, at least one pneumatic spring, at least one hydraulic spring and/or at least one gas pressure spring, and/or
the sensing device (190) is arranged at least in areas in the bearing element and/or on the side of the bearing element, preferably the pivot bearing (110, 110'), that faces away from the fork and/or the wheel (90, 90').

5. The support roller (30, 30') according to any of the preceding claims, **characterized by** at least one position detection device, by means of which it is possible to determine an alignment of the fork, the bearing shaft and/or the wheel (90, 90') about the pivot axis (S) and/or relative to the subsurface.

6. The support roller (30, 30') according to any of the preceding claims, **characterized in that**
the sensing device (190) and/or the position detection device comprise(s) at least one sensor means, in particular comprising at least one end position switch, at least one strain gauge sensor, at least one pressure sensor, at least one Hall-effect sensor, at least one radar sensor, at least one ultrasonic sensor, at least one distance sensor, at least one echo sounder sensor, at least one acoustic sensor, at least one optical sensor, at least one electromagnetic sensor and/or at least one magnetic sensor, and/or the first position and/or at least one second position of the first element relative to the second element can be sensed by means of the sensing device (190).

7. A vehicle, in particular an industrial truck, comprising at least one support roller (30, 30') according to any of the preceding claims.

8. The vehicle according to Claim 7, **characterized in that**
the vehicle further comprises at least one coupling rocker (210), the coupling rocker (210) being arranged mechanically between the supporting structure and the support roller (30, 30'), the coupling rocker (210) having at least one rocker (214) which is mounted rotatably about at least one pivot shaft (D) and a lever (216, 216') which is operatively connected to the rocker (214), wherein the support roller (30, 30'), in particular the bearing element, is supported on the end of the lever (216, 216') that is remote from the pivot axis (S) and/or the rocker (214), wherein further preferably the lever (216, 216') is comprised by the rocker (214) and/or is formed integrally with the rocker (214) at least in areas, the coupling rocker (210) in particular comprising at least one third restoring device, by means of which the rocker (214) and/or the lever (216, 216') can be forced into at least one third position, the third restoring device preferably comprising at least one torsion spring, at least one coil spring, at least one tension spring, at least one push spring, at least one shear spring, at least one rubber-elastic element, at least one conical spring and/or at least one gas pressure spring.

9. The vehicle according to Claim 8, **characterized in that**
(i) the coupling rocker (210) comprises at least one damping apparatus, wherein a movement, in particular of the lever (216, 216'), of the support roller (30, 30') and/or of the rocker (214), about the pivot shaft (D) can be damped by means of the damping apparatus, and/or
(ii) the vehicle is **characterized by** at least one control member, in particular which is operatively connected to the damping apparatus, it being possible by means of the control member for a movement, in particular of the lever (216, 216'), of the support roller (30, 30') and/or of the rocker (214), about the pivot shaft (D) to be reduced, preferably suppressed, the control member preferably being comprised at least in areas by the damping apparatus.

10. The vehicle according to Claim 9, **characterized in that**
the damping apparatus and/or the control member comprise(s) at least one cylinder, in particular a hydraulic cylinder (250), having at least one piston (252) that is movable within the cylinder, the cylinder being operatively connected to the lever (216, 216'), to the support roller (30, 30'), in particular to the bearing element, and/or to the rocker (214), preferably via a connecting element (230) extending at least in a radial direction with respect to the pivot shaft (D), and the piston (252) being operatively connected to the supporting structure, or the piston (252) being operatively connected to the lever (216, 216'), to the rocker (214), to the support roller (30, 30'), to the bearing element and/or to the connecting element (230), and the cylinder being operatively connected to the supporting structure.

11. The vehicle according to Claim 10, **characterized in that**
the control member comprises at least one control element, wherein the control element preferably comprises at least one control valve and/or, by closing the control element, a movement of the damping apparatus and/or of the control member and/or a movement, in particular of the rocker (214), of the lever (216, 216') and/or of the support roller (30, 30'), about the pivot shaft (D) are/is prevented and, when the control element is opened, a movement of the damping apparatus and/or of the control member and/or a movement, in particular of the rocker (214), of the lever (216, 216') and/or of the support roller (30, 30'), about the pivot shaft (D) are/is enabled.

12. The vehicle according to Claim 11, **characterized in that**
(i) the cylinder preferably comprises a single-acting cylinder, and the control element comprises a throttle element (258) which is adapted to control the flow rate of at least one fluid, preferably a hydraulic fluid, a gas and/or air into the cylinder, preferably to allow damping, wherein preferably the control element is adapted to control the throttle element (258) on the basis of the supporting force detected by the sensing device in order to increase the fluid pressure to avoid a reduction in the supporting force below a predetermined value, or
(ii) the cylinder, in particular the hydraulic cylinder (250), comprises at least two cylinder chambers (254, 256) which can be connected to one another via at least one throttle, the fluid in particular being movable between the cylinder chambers (254, 256), in particular by movement of the piston (252).

13. The vehicle according to Claim 9, **characterized in that**
the control member comprises at least one braking means (262), in particular an electromagnetic brake, a mechanical brake, a frictionally operating brake and/or a form-fittingly operating brake, the braking means preferably being operatively connected, firstly, to the rocker (214) and/or to the support roller (30, 30') and/or, secondly, to the supporting structure, wherein preferably
(a) the braking means (262) is arranged, at least in areas, preferably extending circularly, around the pivot shaft (D) of the coupling rocker (210), and/or
(b) the vehicle is **characterized by** at least one control device which is operatively connected to the control member and/or to the damping apparatus, wherein the control device comprises at least one energy supply of the braking means (262), in particular an electrical power supply and/or an apparatus for storing and/or delivering mechanical energy, and, when energy is delivered from the control device to the control member, a movement of the damping apparatus and/or of the control member and/or a movement, in particular of the rocker (214) and/or of the support roller (30, 30'), about the pivot shaft (D) are/is prevented, and, when the delivery of energy is interrupted, a movement of the damping apparatus and/or of the control member and/or a movement, in particular of the rocker (214) and/or of the support roller (30, 30'), about the pivot shaft (D) are/is enabled.

14. The vehicle according to any of Claims 7 to 13, **characterized by** at least one control apparatus which is operatively connected to the sensing device (190), to the position detection device, to the control device and/or to the control member, preferably the control element, wherein preferably the control member can be influenced by means of the control apparatus in such a way that the movement about the pivot shaft (D) is reduced, preferably prevented, if the sensing device (190) senses a supporting force that corresponds to a lack of contact between the support roller (30, 30') and the subsurface, and/or the movement about the pivot shaft (D) is at least in part enabled if the sensing device (190) senses a supporting force that corresponds to the presence of contact between the support roller (30, 30') and the subsurface, wherein in particular the control apparatus influences the control member on the basis of a position of at least one lifting fork of the vehicle, in particular relative to the subsurface, a speed of the vehicle and/or a steering angle of the vehicle.

15. The vehicle according to any of Claims 7 to 14, **characterized in that**
(i) the control member comprises at least one pump means for increasing fluid pressure in the cylinder, in particular the cylinder chambers (254, 256), preferably the control apparatus being adapted to control the pump means on the basis of the supporting force sensed by means of the sensing device (190) in order to increase the fluid pressure to avoid a reduction in the supporting force below a predetermined value,
(ii) the vehicle being **characterized by** a plurality of support rollers (30, 30') according to any of Claims 1 to 6, the coupling rocker (210) preferably comprising a plurality of levers (216, 216') which are preferably arranged on the rocker (214), comprised by the rocker (214) and/or formed integrally with the rocker (214) at least in areas, and/or
(iii) the vehicle is designed as an industrial truck and/or as a pallet truck having at least one drive wheel, in particular a pallet truck having a five-wheel chassis.

16. A method (1000) for stabilizing a vehicle, in particular a vehicle according to any of Claims 7 to 15, having a coupling rocker (210) and at least one support roller (30, 30') according to any of Claims 1 to 6, comprising the steps of:
detecting (1010) a supporting force with which the support roller (30, 30') is supported on a subsurface, wherein, in the case of at least one first supporting force, the support roller (30, 30') is in contact with the subsurface, and in the case of at least one second supporting force, the support roller (30, 30') is not in contact with the subsurface; and
controlling (1020) a control member (250) on the basis of the detected supporting force, wherein a rotation of the coupling rocker (210) and/or the support roller (30, 30') about a pivot shaft (D) are/is at least in part prevented by means of the control member when the second supporting force is detected.

17. The method (1000) according to Claim 16, **characterized in that**
(a) when the first supporting force is detected, a movement about the pivot shaft (D) is damped by means of at least one damping apparatus,
(b) the damping and the prevention of the movement about the pivot shaft (D) are carried out by means of an apparatus which comprises the control member and the damping apparatus at least in areas, the damping apparatus and the control member in particular being formed integrally at least in areas, and/or
(c) the prevention of the movement about the pivot shaft (D) is achieved by preventing movement of the damping apparatus and/or at least one third restoring device.

## Revendications

1. Roulette d'appui (30, 30') pour le soutien d'un véhicule sur un sol, comprenant au moins un élément de palier (110, 110') pouvant être relié au moins indirectement à au moins une structure porteuse du véhicule, au moins une fourche (70) reliée à l'élément de palier et au moins une roue (90, 90') montée dans la fourche de manière rotative autour d'un um premier axe de roulement (R) et pouvant être mise en contact avec le sol, ladite roulette d'appui comprenant en outre au moins un dispositif de détection (190) pour la détection d'au moins une force d'appui avec laquelle la roue (90, 90') prend appui sur le sol, **caractérisée en ce que**
l'élément de palier est réalisé sous la forme d'au moins un palier rotatif (110, 110') et **en ce qu'**au moyen du palier rotatif (110, 110') une rotation de la fourche est rendue possible autour d'un axe de pivotement (S) s'étendant sensiblement perpendiculairement à l'axe de roulement (R), la fourche et/ou l'axe de roulement (R) pouvant être contraints au moyen d'au moins un premier dispositif de rappel vers au moins une position prédéfinie par rapport à l'élément de palier et/ou la structure porteuse par rapport à l'axe de pivotement (S).

2. Roulette d'appui (30, 30') selon la revendication 1, **caractérisée en ce que**
(i) l'axe de roulement (R) s'étend perpendiculairement à une direction normale (N) du sol et/ou la structure porteuse est au moins partiellement formée par une pièce de carrosserie du véhicule ;
(ii) l'axe de roulement (R) et l'axe de pivotement (S) se croisent ou s'étendent inclinés l'un par rapport à l'autre, et/ou
(iii) au moyen du dispositif de détection (190), un déplacement d'au moins un premier élément est détectable par rapport à au moins un deuxième élément, préférentiellement un déplacement, en particulier linéaire, dans une première direction s'étendant perpendiculairement à l'axe de roulement (R) et/ou parallèlement à l'axe de pivotement (S), et/ou au moyen du dispositif de détection (190), une force agissant entre le premier élément et le deuxième élément est détectable, en particulier une force de traction, une force de pression et/ou une force de cisaillement.

3. Roulette d'appui (30, 30') selon la revendication 1 ou la revendication 2, **caractérisée en ce que**
(a) le premier élément est sélectionné dans le groupe comprenant la roulette, un axe de palier de la roulette monté dans la fourche, la fourche, au moins un moyen de connexion de la fourche avec l'élément de palier, tel qu'un tenon (114), et l'élément de palier, et/ou le deuxième élément est sélectionné dans le groupe comprenant l'axe de palier, la fourche, le moyen de connexion, l'élément de palier et la structure porteuse,
(b) le deuxième élément, en particulier l'élément de palier est adapté pour maintenir de manière mobile le long de la première direction (X) le premier élément, en particulier la fourche, le deuxième élément (110, 110') est préférentiellement adapté pour permettre le déplacement du premier élément jusqu'à 5 mm, en particulier de 3 mm, préférentiellement par rapport au deuxième élément, et/ou
(c) le premier élément, en particulier la fourche et/ou le moyen de connexion, peut être contraint au moyen d'au moins un deuxième dispositif de rappel vers une première position, en particulier dans une direction (X) vers le deuxième élément.

4. Roulette d'appui (30, 30') selon la revendication 2 ou 3, **caractérisée en ce que**
le premier dispositif de rappel et/ou le deuxième dispositif de rappel comprennent au moins un moyen élastique (170), au moins un ressort de pression, au moins un ressort hélicoïdal, au moins un ressort pneumatique, au moins un ressort hydraulique et/ou au moins un ressort à gaz, et/ou
le dispositif de détection (190) est disposé au moins en partie dans l'élément de palier et/ou sur le côté de l'élément de palier, préférentiellement du palier rotatif (110, 110'), opposé à la fourche et/ou à la roue (90, 90').

5. Roulette d'appui (30, 30') selon l'une quelconque des revendications précédentes, **caractérisée par** au moins un dispositif de détection de position, au moyen duquel peut être déterminée une orientation de la fourche, de l'axe de palier et/ou de la roue (90, 90') autour de l'axe de pivotement (S) et/ou par rapport au sol.

6. Roulette d'appui (30, 30') selon l'une quelconque des revendications précédentes, **caractérisée en ce que**
le dispositif de détection (190) et/ou le dispositif de détection de position comprennent au moins un moyen de détection, en particulier comprenant au moins un commutateur de fin de course, au moins un capteur d'extensométrie, au moins un capteur de pression, au moins un capteur à effet Hall, au moins un capteur radar, au moins un capteur à ultrasons, au moins un capteur de distance, au moins un capteur sonar, au moins un capteur acoustique, au moins un capteur optique, au moins un capteur électromagnétique et/ou au moins un capteur magnétique et/ou **en ce que** la première position et/ou au moins une deuxième position du premier élément par rapport au deuxième élément sont détectables au moyen du dispositif de détection (190).

7. Véhicule, en particulier chariot de manutention, comprenant au moins une roulette d'appui (30, 30') selon l'une quelconque des revendications précédentes.

8. Véhicule selon la revendication 7, **caractérisé en ce que**
le véhicule comprend en outre au moins une bras oscillant d'accouplement (210), ledit bras oscillant d'accouplement (210) étant mécaniquement disposé entre la structure porteuse et la roulette d'appui (30, 30') et ledit bras oscillant d'accouplement (210) présentant au moins une bascule (214) montée de manière rotative autour d'au moins un axe de rotation (D) ainsi qu'un levier (216, 216') en liaison active avec la bascule (214), la roulette d'appui (30, 30'), en particulier l'élément de palier, prenant appui sur l'extrémité du levier (216, 216') opposée à l'axe de pivotement (S) et/ou à la bascule (214), le levier (216, 216') étant en outre préférentiellement compris dans la bascule (214) et/ou au moins en partie formé d'une seule pièce avec la bascule (214), le bras oscillant d'accouplement (210) comprenant en particulier au moins un troisième dispositif de rappel, au moyen duquel la bascule (214) et/ou le levier (216, 216') peuvent être contraints vers au moins une troisième position, ledit troisième dispositif de rappel comprenant préférentiellement au moins un ressort de torsion, au moins un ressort hélicoïdal, au moins un ressort de traction, au moins un ressort de poussée, au moins un ressort de cisaillement, au moins un élément à élasticité de caoutchouc, au moins un ressort à vis et/ou au moins un ressort à gaz.

9. Véhicule selon la revendication 8, **caractérisé en ce que**
(i) le bras oscillant d'accouplement (210) comprend au moins un dispositif d'amortissement, un déplacement, en particulier du levier (216, 216'), de la roulette d'appui (30, 30') et/ou de la bascule (214) autour de l'axe de rotation (D) pouvant être amorti au moyen dudit dispositif d'amortissement, et/ou
(ii) le véhicule est **caractérisé par** au moins un organe de commande, en particulier en liaison active avec le dispositif d'amortissement, un déplacement, en particulier du levier (216, 216'), de la roulette d'appui (30, 30') et/ou de la bascule (214) autour de l'axe de rotation (D) pouvant être limité, préférentiellement empêché, au moyen dudit organe de commande, ledit organe de commande étant préférentiellement au moins partiellement compris dans le dispositif d'amortissement.

10. Véhicule selon la revendication 9, **caractérisé en ce que**
le dispositif d'amortissement et/ou l'organe de commande comprennent au moins un cylindre, en particulier un cylindre hydraulique (250), avec au moins un piston (252) mobile à l'intérieur du cylindre, ledit cylindre étant en liaison active avec le levier (216, 216'), la roulette d'appui (30, 30'), en particulier l'élément de palier, et/ou la bascule (214), préférentiellement au moyen d'un élément de connexion (230) s'étendant au moins dans une direction radiale par rapport à l'axe de rotation (D), et le piston (252) étant en liaison active avec la structure porteuse ou le piston (252) étant en liaison active avec le levier (216, 216'), la bascule (214), la roulette d'appui (30, 30'), l'élément de palier et/ou l'élément de connexion (230), et le cylindre étant en liaison active avec la structure porteuse.

11. Véhicule selon la revendication 10, **caractérisé en ce que**
l'organe de commande comprend au moins un élément de commande, ledit élément de commande comprenant préférentiellement au moins une soupape de commande et/ou un déplacement du dispositif d'amortissement et/ou de l'organe de commande et/ou un déplacement, en particulier de la bascule (214), du levier (216, 216') et/ou de la roulette d'appui (30, 30') autour de l'axe de rotation (D) sont empêchés par fermeture de l'élément de commande, et un déplacement du dispositif d'amortissement et/ou de l'organe de commande et/ou un déplacement, en particulier de la bascule (214), du levier (216, 216') et/ou de la roulette d'appui (30, 30') autour de l'axe de rotation (D) sont permis lors de l'ouverture de l'élément de commande.

12. Véhicule selon la revendication 11, **caractérisé en ce que**
(i) le cylindre comprend préférentiellement un cylindre à action simple et l'élément de commande un élément d'étranglement (258), adapté pour commander le débit d'au moins un fluide, préférentiellement un liquide hydraulique, un gaz et/ou de l'air dans le cylindre, préférentiellement pour permettre un amortissement, l'élément de commande étant préférentiellement adapté pour commander l'élément d'étranglement (258) en fonction de la force d'appui détectée au moyen du dispositif de détection, pour élever la pression du fluide, afin d'empêcher une chute de la force d'appui en dessous d'une valeur prédéterminée, ou
(ii) le cylindre, en particulier le cylindre hydraulique (250), comprend au moins deux chambres de cylindre (254, 256) pouvant être reliées entre elles par au moins un étranglement, le fluide étant mobile en particulier entre les chambres de cylindre (254, 256), en particulier par déplacement du piston (252).

13. Véhicule selon la revendication 9, **caractérisé en ce que**
l'organe de commande comprend au moins un moyen de freinage (262), en particulier un frein électromagnétique, un frein mécanique, un frein fonctionnant par adhérence et/ou par engagement positif, ledit moyen de freinage, étant préférentiellement en liaison active d'une part avec la bascule (214) et/ou la roulette d'appui (30, 30') et/ou d'autre part avec la structure porteuse,
(a) le moyen de freinage (262) étant disposé de manière à contourner préférentiellement circulairement l'axe de rotation (D) du bras oscillant d'accouplement (210) au moins en partie, et/ou
(b) le véhicule étant **caractérisé par** au moins un dispositif de commande en liaison active avec l'organe de commande et/ou le dispositif d'amortissement, ledit dispositif de commande comprenant au moins une alimentation en énergie du moyen de freinage (262), en particulier une alimentation en tension électrique et/ou un dispositif pour l'accumulation et/ou la délivrance d'énergie mécanique, et la délivrance d'énergie du dispositif de commande à l'organe de commande empêchant un déplacement du dispositif d'amortissement et/ou de l'organe de commande et/ou un déplacement, en particulier de la bascule (214) et/ou de la roulette d'appui (30, 30'), autour de l'axe de rotation (D), et une interruption de la délivrance d'énergie permettant un déplacement du dispositif d'amortissement et/ou de l'organe de commande et/ou un déplacement, en particulier de la bascule (214) et/ou de la roulette d'appui (30, 30'), autour de l'axe de rotation (D).

14. Véhicule selon l'une quelconque des revendications 7 à 13, **caractérisé par** au moins un dispositif de commande en liaison active avec le dispositif de détection (190), le dispositif de détection de position, le dispositif de commande et/ou l'organe de commande, préférentiellement l'élément de commande, l'organe de commande pouvant préférentiellement être influencé au moyen dudit dispositif de commande, de manière à limiter, préférentiellement empêcher un déplacement autour de l'axe de rotation (D), lorsqu'une force d'appui est détectée au moyen du dispositif de détection (190), laquelle correspond à l'absence de contact entre la roulette d'appui (30, 30') et le sol et/ou à permettre au moins partiellement le déplacement autour de l'axe de rotation (D), lorsqu'une force d'appui est détectée au moyen du dispositif de détection (190), laquelle correspond à l'existence d'un contact entre la roulette d'appui (30, 30') et le sol, le dispositif de commande influençant en particulier l'organe de commande en fonction d'une position d'au moins une fourche élévatrice du véhicule, en particulier par rapport au sol, une vitesse du véhicule et/ou un angle de braquage du véhicule.

15. Véhicule selon l'une quelconque des revendications 7 à 14, **caractérisé en ce que**
(i) l'organe de commande comprend au moins un dispositif de pompe destiné à élever une pression du fluide dans le cylindre, en particulier les chambres de cylindre (254, 256), le dispositif de commande étant préférentiellement adapté pour commander le dispositif de pompe en fonction de la force d'appui détectée au moyen du dispositif de détection (190), afin d'élever la pression du fluide, pour empêcher une chute de la force d'appui en dessous d'une valeur prédéterminée,
(ii) le véhicule est **caractérisé par** une pluralité de roulettes d'appui (30, 30') selon l'une des revendications 1 à 6, le bras oscillant d'accouplement (210) comprenant préférentiellement une pluralité de leviers (216, 216'), préférentiellement disposés contre la bascule (214), compris dans la bascule (214) et/ou au moins en partie formés d'une seule pièce avec la bascule (214), et/ou
(iii) le véhicule étant réalisé comme chariot élévateur et/ou comme chariot élévateur à fourche avec au moins une roue motrice, en particulier comme chariot élévateur à fourche à train de roulement à cinq roues.

16. Procédé (1000) de stabilisation d'un véhicule, en particulier d'un véhicule selon l'une des revendications 7 à 15, avec un bras oscillant d'accouplement (210) et au moins une roulette d'appui (30, 30') selon l'une quelconque des revendications 1 à 6, comprenant les étapes suivantes :
détection (1010) d'une force d'appui, avec laquelle la roulette d'appui (30, 30') prend appui sur un sol, la roulette d'appui (30, 30') étant en contact avec le sol au moins pour une première force d'appui, et la roulette d'appui (30, 30') n'étant pas en contact avec le sol pour au moins une deuxième force d'appui ; et
commande (1020) d'un organe de commande (250) en fonction de la force d'appui détectée, une rotation du bras oscillant d'accouplement (210) et/ou de la roulette d'appui (30, 30') autour d'un axe de rotation (D) étant au moins partiellement empêchée au moyen de l'organe de commande en cas de détection de la deuxième force d'appui.

17. Procédé (1000) selon la revendication 16, **caractérisé**
(a) **en ce qu'**en cas de détection de la première force d'appui, un déplacement autour de l'axe de rotation (D) est amorti au moyen d'au moins un dispositif d'amortissement,
(b) l'amortissement et l'évitement du déplacement autour de l'axe de rotation (D) sont réalisés au moyen d'un dispositif comprenant au moins partiellement l'organe de commande et le dispositif d'amortissement, le dispositif d'amortissement et l'organe de commande étant en particulier au moins en partie formés d'une seule pièce, et/ou
(c) l'évitement du déplacement autour de l'axe de rotation (D) est obtenu en empêchant un déplacement du dispositif d'amortissement et/ou d'au moins un troisième dispositif de rappel.
